(19) Europäisches Patentamt / European Patent Office / Office européen des brevets

(11) **EP 3 648 064 A1**

(12) **EUROPEAN PATENT APPLICATION**
published in accordance with Art. 153(4) EPC

(43) Date of publication:
06.05.2020 Bulletin 2020/19

(21) Application number: 18823369.6

(22) Date of filing: 12.06.2018

(51) Int Cl.:
*G06T 15/04* (2011.01)          *G06F 13/00* (2006.01)
*G06T 3/00* (2006.01)           *H04N 21/2343* (2011.01)
*H04N 21/431* (2011.01)         *H04N 21/4728* (2011.01)

(86) International application number:
**PCT/JP2018/022303**

(87) International publication number:
**WO 2019/003889 (03.01.2019 Gazette 2019/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.06.2017 JP 2017123934**

(71) Applicant: **Sony Corporation**
**Tokyo 108-0075 (JP)**

(72) Inventor: **IZUMI, Nobuaki**
**Tokyo 108-0075 (JP)**

(74) Representative: **D Young & Co LLP**
**120 Holborn**
**London EC1N 2DY (GB)**

(54) **GENERATION DEVICE AND GENERATION METHOD, AND PLAYBACK DEVICE AND PLAYBACK METHOD**

(57) The present disclosure relates to a generation device and a generation method, and a reproduction device and a reproduction method enabled to provide a mapping that is applicable to an arbitrary mapping method and in which high resolution is set in a viewing direction.

The generation device includes a normalization unit that converts a first vector that maps a 360-degree image onto a predetermined 3D model into a second vector of a 3D model of a unit sphere. The present disclosure can be applied to, for example, a generation device that generates a 360-degree image from captured images in six directions, and generates an encoded stream in which high resolution is set in a predetermined direction of the 360-degree image, and the like.

*FIG. 2*

**Description**

TECHNICAL FIELD

The present disclosure relates to a generation device and a generation method, and a reproduction device and a reproduction method, and in particular, a generation device and a generation method, and a reproduction device and a reproduction method enabled to provide a mapping that is applicable to an arbitrary mapping method and in which high resolution is set in a viewing direction.

BACKGROUND ART

Examples of a method of reproducing an omnidirectional image in which it is possible to look around 360 degrees in all directions of top, bottom, left, and right, includes: a method of viewing while changing a display direction by using a controller on a general display; a method of displaying on a mobile terminal screen held in a hand by changing a direction on the basis of posture information obtained from a gyro sensor incorporated in the terminal; a method of displaying an image by a head mounted display mounted on the head reflecting movement of the head; and the like.

A feature of a reproduction device for one person that reproduces an omnidirectional image by these reproduction methods, is that an image actually displayed is limited to a part of the omnidirectional image since it is not necessary to display data in a direction in which a viewer is not viewing although input image data is prepared for the omnidirectional image. If transmission and decoding processing can be reduced of a part not being displayed, line bandwidth efficiency can be increased.

However, in a general method of compressing using a standard codec such as Moving Picture Experts Group phase 2 (MPEG2) or Advanced Video Coding (AVC), both the space direction and the time axis direction are compressed using redundancy, and it is difficult to cut out and decode an arbitrary area, and to start reproduction from an arbitrary time.

Moreover, there is also a problem of server response delay in a case where data is sent for distribution or the like from a server via a network. Therefore, it is very difficult to instantaneously switch data by using a video codec, and even if omnidirectional data is divided into multiple data, when the viewer suddenly changes a direction of viewing, a state occurs of data loss in which there is no data to be displayed, until the switching is actually occurs. Since reproduction quality is extremely degraded when this data loss state occurs, in construction of an actual omnidirectional distribution system, it is necessary to maintain a state in which minimum data for all directions exist to prepare for sudden turning around.

Therefore, various methods have been devised to make an image high resolution and high quality in a direction in which the viewer is viewing while securing the minimum data for the omnidirectional image within a limited line bandwidth.

For example, Patent Document 1 devises a so-called divided hierarchical distribution system in which a low-resolution omnidirectional image of equirectangular projection and a high-resolution partially cut-out image are combined and viewed. In the divided hierarchical distribution system, a high resolution partial image in a viewing direction is distributed while being switched depending on a direction of the viewer. In a case of drawing of an area where the high resolution partial image around the visual field is not covered, or in a case where the stream cannot be switched in time due to sudden turning around, a low-resolution omnidirectional image is used, to prevent occurrence of a state in which there is no image to be displayed.

A problem with such a divided hierarchical method is that, an image is drawn by using the high resolution with good image quality in a portion where the high resolution and the low resolution overlap each other, so that a low resolution side of the overlapping portion is wasted. Double transmission of the high resolution and the low resolution results in loss of line bandwidth.

There is also a method devised for eliminating the waste of double transmission of this overlapping portion.

For example, there is a method of using a mapping designed such that directions for the omnidirectional image is included in one image, and an area, in other words, the number of pixels allocated varies depending on the direction, and one specific direction has high resolution.

This method is described, for example, in the chapter "A.3.2.5 Truncated pyramid" of Working Draft "WD on ISO/IEC 23000-20 Omnidirectional Media Application Format" published at the Geneva meeting in June 2016 of the MPEG meeting (See Non-Patent Document 1). Furthermore, a similar method is also described in Non-Patent Document 2. Facebook, Inc. publishes another mapping based on a similar idea, which is called as "Pyramid Coding", on the Web (see Non-Patent Document 3).

According to this method, the number of allocated pixels in the front area is large, and the resolution is high. A plurality of bit streams having different front directions is prepared, and transmission is performed while the bit streams are switched depending on the direction in which the viewer is viewing. Even if there is a difference in resolution, data in all directions are included, so that a sudden change in viewing direction does not cause data loss.

Such a mapping in which high resolution is set in the viewing direction front, and low resolution is set in the other directions, is called "viewport dependent projection mapping" in the MPEG meeting.

CITATION LIST

PATENT DOCUMENT

Patent Document 1: Japanese Patent Application Laid-Open No. 2016-15705

NON-PATENT DOCUMENT

Non-Patent Document 1: http://mpeg.chiariglione.org/standards/mpeg-a/omnidirectional-media-application-format/wd-isoiec-23000-20-omnidirectional-media
Non-patent Document 2: https://www.itu.int/en/ITU-T/studygroups/2017-2020/16/Documents/ws/201701ILE/S2P2-1701-01-19-MPEG_Immersive_Media_Thomas_Stockhammer.pdf
Non-Patent Document 3: https://code.facebook.com/posts/1126354007399553/next-generation-video-encoding-techniques-for-360-video-and-vr/

SUMMARY OF THE INVENTION

PROBLEMS TO BE SOLVED BY THE INVENTION

The above-described method of using a mapping in which high resolution is set in the viewing direction front and low resolution is set in the other directions, is a method using a dedicated mapping in which a mapping that causes a resolution difference is newly defined. The method using the dedicated mapping becomes incompatible with a normal mapping method, in other words, a mapping of displaying an omnidirectional image with uniform pixel density (resolution) in all directions. Therefore, a mapping is desired that can use a mapping designed for a general omnidirectional image as it is, and can generate an image with a high resolution in a specific direction.

The present disclosure has been made in view of such a situation, and is enabled to provide a mapping that is applicable to an arbitrary mapping method and in which high resolution is set in a viewing direction.

SOLUTIONS TO PROBLEMS

A generation device of a first aspect of the present disclosure includes a normalization unit that converts a first vector that maps a 360-degree image onto a predetermined 3D model into a second vector of a 3D model of a unit sphere.

A generation method of the first aspect of the present disclosure includes converting a first vector of a predetermined 3D model onto which a 360-degree image is mapped into a second vector of a 3D model of a unit sphere.

In the first aspect of the present disclosure, the first vector of the predetermined 3D model onto which the 360-degree image is mapped is converted into the second vector of the 3D model of the unit sphere.

A reproduction device of a second aspect of the present disclosure includes: a receiving unit that receives a 360-degree image generated by another device; and a normalization unit that converts a first vector that maps the 360-degree image onto a predetermined 3D model into a second vector of a 3D model of a unit sphere.

A reproduction method of the second aspect of the present disclosure includes receiving a 360-degree image generated by another device, and converting a first vector that maps the 360-degree image onto a predetermined 3D model into a second vector of a 3D model of a unit sphere.

In the second aspect of the present disclosure, the 360-degree image generated by the other device is received, and the first vector that maps the 360-degree image onto the predetermined 3D model is converted into the second vector of the 3D model of the unit sphere.

Note that, the generation device of the first aspect and the reproduction device of the second aspect of the present disclosure can be implemented by causing a computer to execute a program.

Furthermore, to implement the generation device of the first aspect and the reproduction device of the second aspect of the present disclosure, the program to be executed by the computer can be provided by being transmitted via a transmission medium or recorded on a recording medium.

The generation device and the reproduction device each may be an independent device or an internal block included in one device.

EFFECTS OF THE INVENTION

According to the first and second aspects of the present disclosure, it is enabled to provide a mapping that is applicable to an arbitrary mapping method and in which high resolution is set in a viewing direction.

Note that, the effect described here is not necessarily limited, and can be any effect described in the present disclosure.

BRIEF DESCRIPTION OF DRAWINGS

Fig. 1 is a block diagram illustrating a configuration example of a first embodiment of a distribution system to which the present disclosure is applied.

Fig. 2 is a block diagram illustrating a configuration example of a generation device of Fig. 1.

Fig. 3 is a diagram illustrating setting of the high resolution direction.

Fig. 4 is a block diagram illustrating a detailed configuration of a mapping processing unit.

Fig. 5 is a diagram illustrating mappings of the mapping processing unit.

Fig. 6 is a diagram illustrating a relationship between a texture image and a 3D model in regular octahedron mapping.

Fig. 7 is a diagram illustrating processing of the mapping processing unit according to the first embodiment.

Fig. 8 is a diagram illustrating a case where each pixel on the spherical surface of a unit sphere is viewed from an offset position.

Fig. 9 is a diagram illustrating a correspondence between a two-dimensional texture image and a 3D model by mapping processing of a mapping f.

Fig. 10 is a diagram illustrating a correspondence between a two-dimensional texture image and a 3D model by mapping processing of a mapping f'.

Fig. 11 is a diagram illustrating a correspondence between a two-dimensional texture image and a 3D model by mapping processing of a mapping f".

Fig. 12 is a diagram illustrating a configuration example of auxiliary information generated by a table generation unit.

Fig. 13 is a diagram illustrating an azimuth angle $\theta$, an elevation angle $\varphi$, and a rotation angle $\psi$.

Fig. 14 is a diagram illustrating an example of six omnidirectional images having different high resolution directions.

Fig. 15 is a flowchart illustrating generation processing.

Fig. 16 is a block diagram illustrating a configuration example of a distribution server and a reproduction device of Fig. 1.

Fig. 17 is a diagram illustrating processing of a drawing unit.

Fig. 18 is a flowchart illustrating reproduction processing.

Fig. 19 is a diagram illustrating a modification of the first embodiment.

Fig. 20 is a diagram illustrating the modification of the first embodiment.

Fig. 21 is a diagram illustrating the modification of the first embodiment.

Fig. 22 is a diagram illustrating a direction of the mapping of the mapping processing unit of the generation device and the reproduction device.

Fig. 23 is a diagram illustrating the direction of the mapping of the mapping processing unit of the generation device and the reproduction device.

Fig. 24 is a block diagram illustrating a configuration example of a mapping processing unit according to a second embodiment.

Fig. 25 is a diagram illustrating mappings of the mapping processing unit according to the second embodiment.

Fig. 26 is a diagram illustrating processing of the mapping processing unit according to the second embodiment.

Fig. 27 is a diagram illustrating a correspondence between a two-dimensional texture image and a 3D model by mapping processing of a mapping g.

Fig. 28 is a diagram illustrating a relationship between an eccentricity ratio k and a resolution improvement ratio in the first embodiment.

Fig. 29 is a diagram illustrating a relationship between the eccentricity ratio k and the resolution improvement ratio in the second embodiment.

Fig. 30 is a diagram illustrating an example of the two-dimensional texture image when the eccentricity ratio k is changed in the first embodiment.

Fig. 31 is a diagram illustrating an example of the two-dimensional texture image when the eccentricity ratio k is changed in the second embodiment.

Fig. 32 is a conceptual diagram of mapping processing in the first embodiment.

Fig. 33 is a conceptual diagram of mapping processing in the second embodiment.

Fig. 34 is a diagram illustrating a difference between the mapping processing of the first embodiment and the mapping processing of the second embodiment.

Fig. 35 is a diagram for comparative illustration with a case where a cube model is adopted as the 3D model.

Fig. 36 is a diagram illustrating processing of a mapping processing unit according to a third embodiment.

Fig. 37 is a conceptual diagram of mapping processing in the third embodiment.

Fig. 38 is a diagram illustrating another example of a parameter table as the auxiliary information.

Fig. 39 is a diagram illustrating a modification in which an encoded stream is an omnidirectional image for a 3D image.

Fig. 40 is a block diagram illustrating a configuration example of a computer to which the present disclosure is applied.

Fig. 41 is a block diagram illustrating an example of a schematic configuration of a vehicle control system.

Fig. 42 is an explanatory diagram illustrating an example of installation positions of a vehicle exterior information detecting unit and an imaging unit.

MODE FOR CARRYING OUT THE INVENTION

The following is a description of a mode for carrying out a technology according to the present disclosure (the mode will be hereinafter referred to as the embodiment). Note that, description will be made in the following order.

1. First embodiment
2. Direction of mapping of mapping processing unit of generation device and reproduction device
3. Second embodiment
4. Relationship between eccentricity ratio k and resolution improvement ratio
5. Difference between first embodiment and second embodiment
6. Combination of first embodiment and second embodiment
7. Conclusion
8. Modifications
9. Computer configuration example
10. Application example

<1. First embodiment>

(Configuration example of first embodiment of distribution system)

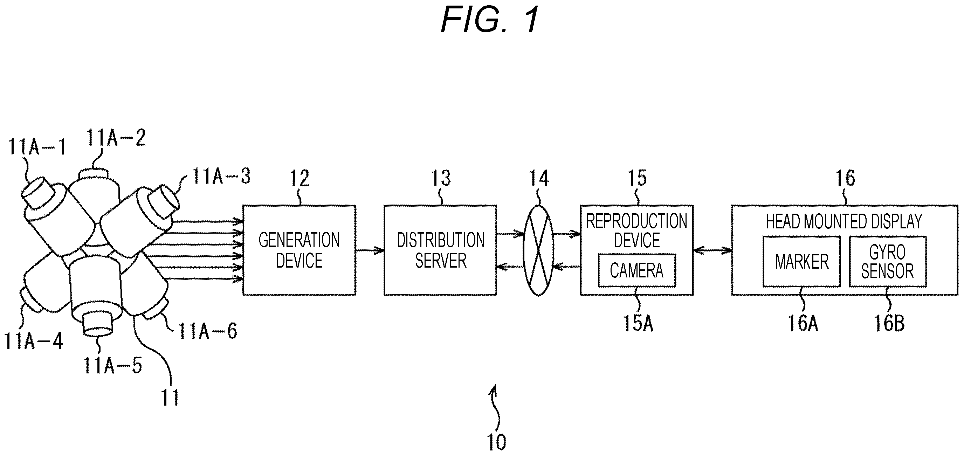

Fig. 1 is a block diagram illustrating a configuration example of a first embodiment of a distribution system to which the present disclosure is applied.

A distribution system 10 of Fig. 1 includes an imaging device 11, a generation device 12, a distribution server 13, a network 14, a reproduction device 15, and a head mounted display 16. The distribution system 10 generates an omnidirectional image from a captured image captured by the imaging device 11, and displays a display image of a visual field range of a viewer by using the omnidirectional image.

Specifically, the imaging device 11 of the distribution system 10 includes six cameras 11A-1 to 11A-6. Note that, in the following, in a case where it is not necessary to distinguish the cameras 11A-1 to 11A-6 in particular, they are referred to as cameras 11A.

Each of the cameras 11A captures a moving image. The imaging device 11 supplies, as captured images, moving images in six directions captured by the respective cameras 11A to the generation device 12. Note that, the number of cameras provided in the imaging device 11 is not limited to six, as long as it is plural.

The generation device 12 generates an omnidirectional image of 360 degrees around in the horizontal direction and 180 degrees around in the vertical direction, from the captured images supplied from the imaging device 11, with a method using equirectangular projection. The generation device 12 compresses and encodes image data in which the omnidirectional image in which it is possible to look around 360 degrees in all directions of top, bottom, left, and right with the equirectangular projection is mapped onto a predetermined 3D model, with a predetermined encoding method such as Advanced Video Coding (AVC) or High Efficiency Video Coding (HEVC)/H.265.

When mapping the omnidirectional image onto the predetermined 3D model, the generation device 12 sets a plurality of directions corresponding to gaze directions of the viewer, and converts the mapping so that high resolution is set for the resolution in the set directions and low resolution is set in the directions opposite to the set directions, for each direction. Then, the generation device 12 generates an encoded stream in which image data of the omnidirectional image generated by using the converted mapping is compressed and encoded.

For example, assuming that, with the center of a cube as a viewing position, six directions from the center in directions perpendicular to respective faces of the cube are set as the plurality of directions, the generation device 12 generates six encoded streams in which the image data of the omnidirectional image is compressed and encoded so that the encoded streams correspond to the six directions. The generated six encoded streams become image data of an omnidirectional image having different directions in which high resolution is set (hereinafter, also referred to as high resolution directions).

The generation device 12 uploads, to the distribution server 13, a plurality of encoded streams respectively having different high resolution directions. Furthermore, the generation device 12 generates auxiliary information for identifying the plurality of encoded streams, and uploads the auxiliary information to the distribution server 13. The auxiliary information is information that defines which direction the high resolution direction is, or the like.

The distribution server 13 connects to the reproduction device 15 via the network 14. The distribution server 13 stores the plurality of encoded streams and the auxiliary information uploaded from the generation device 12. In response to a request from the reproduction device 15, the distribution server 13 transmits the stored auxiliary information and at least one of the plurality of encoded streams to the reproduction device 15 via the network 14.

The reproduction device 15 requests the distribution server 13 via the network 14 to transmit the auxiliary information for identifying the plurality of encoded streams stored in the distribution server 13, and receives the auxiliary information transmitted in response to the request.

Furthermore, the reproduction device 15 incorporates a camera 15A and images a marker 16A attached to the head mounted display 16. Then, the reproduction device 15 detects the viewing position of the viewer in a coordinate system of the 3D model (hereinafter referred to as a 3D model coordinate system) on the basis of the captured image of the marker 16A. Moreover, the reproduction device 15 receives a detection result of a gyro sensor 16B of the head mounted display 16 from the head mounted display 16. The reproduction device 15 determines a gaze direction of the viewer in the 3D model coordinate system on the basis of the detection result of the gyro sensor 16B. The reproduction device 15 determines a visual field range of the viewer positioned inside the 3D model on the basis of the viewing position and the gaze direction.

Then, on the basis of the auxiliary information and the visual field range of the viewer, the reproduction device 15 requests of the distribution server 13 via the network 14 one of the plurality of encoded streams, and receives one encoded stream transmitted from the distribution server 13 in response to the request.

In other words, the reproduction device 15 determines, as an encoded stream to be acquired, an encoded stream in a high resolution direction closest to the gaze direction of the viewer among the plurality of encoded streams stored in the distribution server 13, and requests the distribution server 13 to transmit the encoded stream.

The reproduction device 15 decodes the received one encoded stream. The reproduction device 15 generates a 3D model image by mapping an omnidirectional image obtained as a result of decoding onto a predetermined 3D model.

Then, the reproduction device 15 generates an image of the visual field range of the viewer as the display image, by perspectively projecting the 3D model image onto the visual field range of the viewer with the viewing position as a focal point. The reproduction device 15 supplies the display image to the head mounted display 16.

The head mounted display 16 is mounted on the head of the viewer and displays the display image supplied from the reproduction device 15. To the head mounted display 16, the marker 16A imaged by the camera 15A is attached. Thus, the viewer can designate the viewing position by moving while the head mounted display 16 is mounted on the head. Furthermore, the head mounted display 16 incorporates a gyro sensor 16B, and a detection result of angular velocity by the gyro sensor 16B is transmitted to the reproduction device 15. Thus, the viewer can designate the gaze direction by rotating the head on which the head mounted display 16 is mounted.

The reproduction device 15 generates an image in the visual field range of the viewer while switching the plurality of encoded streams stored in the distribution server 13 depending on a direction in which the viewer is viewing, and causes the head mounted display 16 to display the image. In other words, the plurality of encoded streams stored in the distribution server 13 is dynamically switched so that the resolution is increased in the direction in which the viewer is viewing.

In the distribution system 10, any method may be used as a distribution method from the distribution server 13 to the reproduction device 15. In a case where the distribution method is, for example, a method using Moving Picture Experts Group phase-Dynamic Adaptive Streaming over HTTP (MPEG-DASH), the distribution server 13 is a HyperText Transfer Protocol (HTTP) server, and the reproduction device 15 is an MPEG-DASH client.

(Configuration example of generation device)

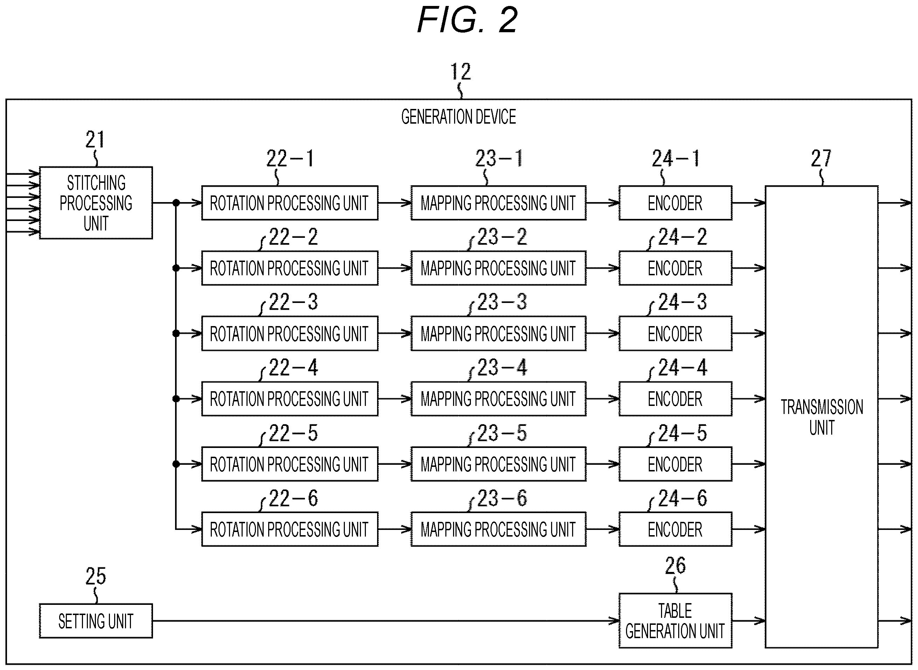

Fig. 2 is a block diagram illustrating a configuration example of the generation device 12 of Fig. 1.

The generation device 12 of Fig. 2 includes a stitching processing unit 21, rotation processing units 22-1 to 22-6, mapping processing units 23-1 to 23-6, encoders 24-1 to 24-6, a setting unit 25, a table generation unit 26, and a transmission unit 27.

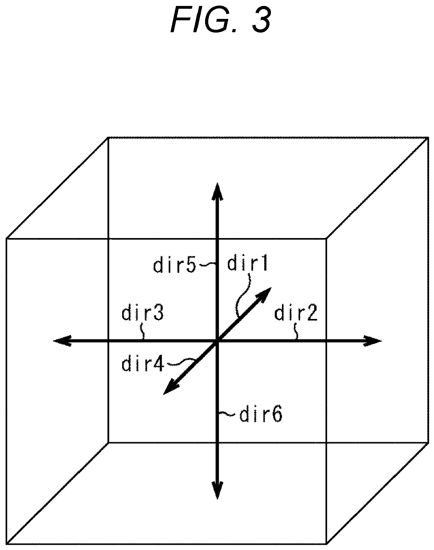

In the generation device 12, the same number of rotation processing units 22, mapping processing units 23, and encoders 24 are provided as the number of high resolution directions. In the present embodiment, in the generation device 12, with the center of a cube as a viewing position, six directions from the center in directions perpendicular to respective faces of the cube are set as the high resolution directions, indicated by arrows dir1 to dir6 in Fig. 3, so that six each are provided of the rotation processing units 22, the mapping processing units 23, and the encoders 24. Assuming a case where 12 directions are set as the high resolution directions, 12 each are provided of the mapping processing units 23 and the encoders 24 in the generation device 12.

In the following, the rotation processing units 22-1 to 22-6 are simply referred to as the rotation processing units 22 in a case where it is not necessary to distinguish them in particular. Similarly, the mapping processing units 23-1 to 23-6 and the encoders 24-1 to 24-6 are referred to as the mapping processing units 23 and the encoders 24 in a case where it is not necessary to distinguish them in particular.

The stitching processing unit 21 makes colors and brightness of captured images in the six directions supplied from the camera 11A of Fig. 1 the same for each frame, and removes overlap and connects the captured images together, to convert the captured images to one captured image having a sufficient resolution. For example, the stitching processing unit 21 performs conversion to an equirectangular image, as the one captured image. The stitching processing unit 21 supplies the equirectangular image that is a captured image on a frame basis to the rotation processing unit 22.

The rotation processing unit 22 rotates (moves) the image center of the captured image on the frame basis (for example, the equirectangular image) supplied from the stitching processing unit 21 so that the high resolution direction is at the center of the image. The setting unit 25 indicates which direction is to be set as the high resolution direction. The rotation processing units 22-1 to 22-6 only differ in the direction indicated from the setting unit 25.

The mapping processing unit 23 generates an omnidirectional image in which high resolution is set in the direction indicated from the setting unit 25, by mapping the captured image converted so that the vicinity of the image center has high resolution onto a predetermined 3D model. In the generated omnidirectional image, resolution in a direction opposite to (directly behind) the direction indicated from the setting unit 25 is low resolution.

The encoder 24 (encoding unit) encodes the omnidirectional image supplied from the mapping processing unit 23 with a predetermined encoding method such as the MPEG2 method or the AVC method, to generate an encoded stream. The encoder 24 supplies the generated one encoded stream to the transmission unit 27.

At this time, since the six encoded streams generated by the encoders 24-1 to 24-6 are dynamically switched and reproduced, so that, for example, sync points such as the first picture of a Group of Picture (GOP) and the IDR picture are made the same as each other between the six encoded streams generated by the encoders 24-1 to 24-6. The encoders 24-1 to 24-6 each supply one encoded stream generated to the transmission unit 27.

The mapping processing unit 23 and the encoder 24 execute the same processing with a direction of the image center of the image supplied from the rotation processing unit 22 corresponding to the high resolution direction set by the setting unit 25, as the front direction. An image in which the high resolution direction is at the image center supplied from the rotation processing unit 22 is referred to as a front direction image.

The setting unit 25 determines high resolution directions treated as front directions by sets of the six rotation processing units 22, mapping processing units 23, and encoders 24 provided in parallel with respect to 360 degrees around in the horizontal direction and 180 degrees around in the vertical direction. The setting unit 25 supplies, to the rotation processing units 22-1 to 22-6, information for specifying one of the six high resolution directions determined. The high resolution directions respectively supplied to the rotation processing units 22-1 to 22-6 are different from each other.

Furthermore, the setting unit 25 determines a resolution improvement ratio indicating how high the resolution is to be set in the high resolution direction, as compared with a case where uniform resolution is set in all directions of 360 degrees around in the horizontal direction and 180 degrees around in the vertical direction, and supplies the resolution improvement ratio to the mapping processing units 23-1 to 23-6. The resolution improvement ratios supplied to the mapping processing units 23-1 to 23-6 may be different values in the mapping processing units 23-1 to 23-6, but the resolution improvement ratios are common values in the present embodiment.

In the present embodiment, the number of high resolution directions set is determined in advance to six, and a configuration is adopted in which six each are provided of the rotation processing units 22, the mapping processing units 23, and the encoders 24 in the generation device 12; however, a configuration may be adopted in which the number of pieces is variable of each of the rotation processing unit 22, the mapping processing unit 23, and the encoder 24, corresponding to an arbitrary number of high resolution directions determined by the setting unit 25.

Moreover, the setting unit 25 supplies, to the table generation unit 26, information specifying the six high resolution directions supplied to the rotation processing units 22-1 to 22-6 and information indicating the resolution improvement ratio supplied to the mapping processing units 23-1 to 23-6.

Note that, in Fig. 2, illustration is omitted of supply lines that supply predetermined data (high resolution direction, resolution improvement ratio) from the setting unit 25 to the rotation processing units 22-1 to 22-6 and the mapping processing units 23-1 to 23-6.

The table generation unit 26 generates a table in which the six high resolution directions and the resolution improvement ratio supplied from the setting unit 25 are collected for each high resolution direction, and supplies the generated table as auxiliary information to the transmission unit 27.

The transmission unit 27 uploads (transmits) a total of six encoded streams respectively supplied from the encoders 24-1 to 24-6, and the auxiliary information supplied from the table generation unit 26 to the distribution server 13 of Fig. 1.

(Configuration example of mapping conversion unit)

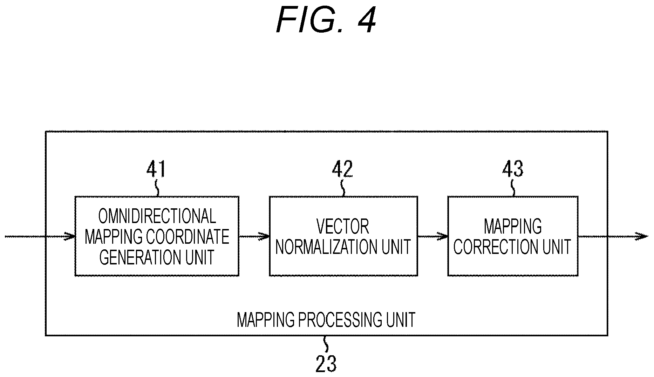

Fig. 4 is a block diagram illustrating a detailed configuration of the mapping processing unit 23.

The mapping processing unit 23 includes an omnidirectional mapping coordinate generation unit 41, a vector normalization unit 42, and a mapping correction unit 43.

An image is supplied from the rotation processing unit 22 to the mapping processing unit 23 for each frame, in which the image is one image (for example, an equirectangular image) having sufficient resolution, and the high resolution direction set by the setting unit 25 is at the image center.

In a case where an omnidirectional image is generated in which uniform resolution is set in all directions of 360 degrees around in the horizontal direction and 180 degrees around in the vertical direction, the mapping processing unit 23 includes only the omnidirectional mapping coordinate generation unit 41. To generate an omnidirectional image in which a predetermined direction is set as the high resolution direction as in the present embodiment, the vector normalization unit 42 and the mapping correction unit 43 are added to the mapping processing unit 23.

The mapping processing unit 23 performs processing of mapping one image (for example, an equirectangular image) supplied from the rotation processing unit 22 to a predetermined 3D model, and in fact, three types of processing of the omnidirectional mapping coordinate generation unit 41, the vector normalization unit 42, and the mapping correction unit 43 are collectively performed by mapping processing of one time.

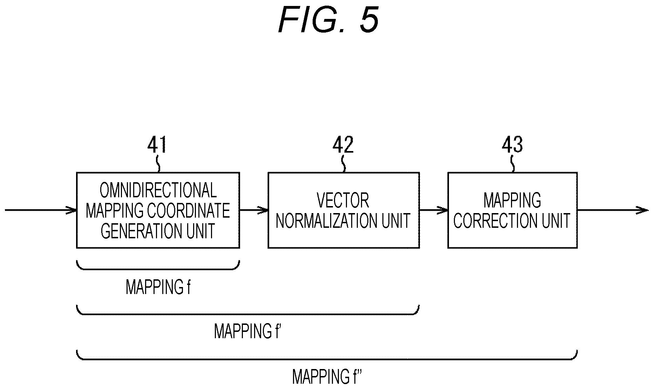

Thus, the mapping processing by the mapping processing unit 23 will be described stepwise, defining a mapping performed by the omnidirectional mapping coordinate generation unit 41 alone as a mapping f, defining a mapping performed by a combination of the omnidirectional mapping coordinate generation unit 41 and the vector normalization unit 42 as a mapping f', and defining a mapping performed by a combination of the omnidirectional mapping coordinate generation unit 41, the vector normalization unit 42, and the mapping correction unit 43 as a mapping f", as illustrated in Fig. 5.

The omnidirectional mapping coordinate generation unit 41 generates an omnidirectional image in which high resolution is set in the high resolution direction by mapping the front direction image supplied from the rotation processing unit 22 onto the predetermined 3D model.

For example, assuming that regular octahedron mapping is adopted for mapping onto a regular octahedron as the predetermined 3D model, the omnidirectional mapping coordinate generation unit 41 generates an omnidirectional image in which high resolution is set in the high resolution direction by mapping the front direction image supplied from the rotation processing unit 22 onto the regular octahedron.

Polyhedron mapping including regular octahedron mapping is a mapping method capable of drawing relatively easily by the GPU by pasting a texture image to a 3D polyhedron solid model including multiple triangle patches and performing perspective projection so that the face of the polyhedron is looked around from the center of the 3D model.

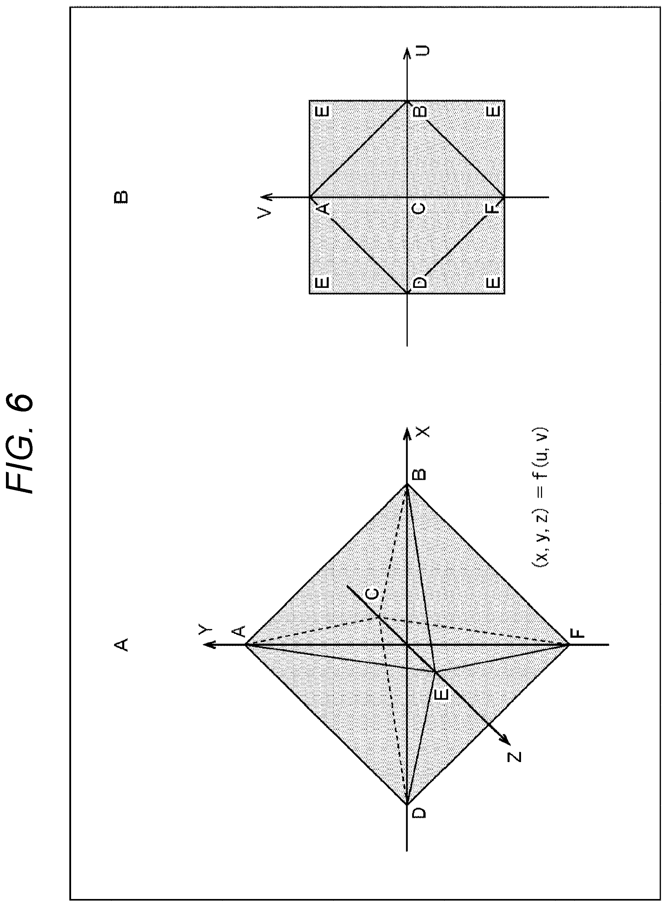

Fig. 6 is a diagram illustrating a relationship between a texture image and a 3D model in the regular octahedron mapping.

A of Fig. 6 illustrates a regular octahedron as the 3D model, and the regular octahedron as the 3D model is defined in a 3D model coordinate system of an X-axis, a Y-axis, and a Z-axis.

B of Fig. 6 is a texture image to be pasted to the regular octahedron as the 3D model, and the texture image is defined by a plane coordinate system of a U-axis and a V-axis.

A correspondence between the texture image (pixel) of plane coordinates $(u, v)$ and a three-dimensional coordinate position $(x, y, z)$ on the regular octahedron is defined by the mapping f, as $(x, y, z) = f(u, v)$.

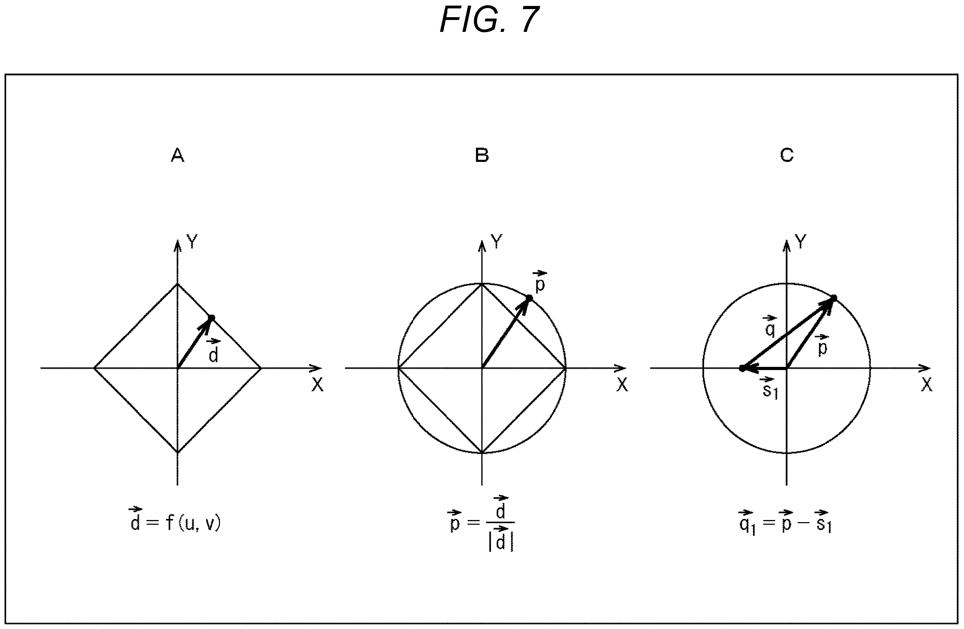

A of Fig. 7 is a schematic diagram of a regular octahedron model in a cross section of $Z = 0$.

As illustrated in A of Fig. 7, with the origin of the regular octahedron as a viewing position, when a vector from the origin to a predetermined three-dimensional coordinate position $(x, y, z)$ on the regular octahedron is a vector d, the mapping f by the omnidirectional mapping coordinate generation unit 41 corresponds to the vector d, and the omnidirectional mapping coordinate generation unit 41 generates the vector d of an equation (1).

[Expression 1]

$$\vec{d} = f(u, v) \qquad \cdots (1)$$

Next, the vector d is normalized by an equation (2) below, whereby a vector p is calculated.
[Expression 2]

$$\vec{p} = \frac{\vec{d}}{|\vec{d}|} \qquad \cdots (2)$$

The vector p represents a vector to a three-dimensional coordinate position (x, y, z) on the spherical surface of a sphere with a radius of 1 (hereinafter referred to as a unit sphere), as illustrated in B of Fig. 7.

The mapping f' performed by the combination of the omnidirectional mapping coordinate generation unit 41 and the vector normalization unit 42 is processing of mapping onto a 3D model of a unit sphere (spherical surface) by using the vector p.

Thus, the vector normalization unit 42 converts the predetermined 3D model (the regular octahedron model in the present embodiment) adopted by the omnidirectional mapping coordinate generation unit 41 into the 3D model of the unit sphere (spherical surface).

The mapping correction unit 43 adds a predetermined offset position vector to the vector p normalized by the vector normalization unit 42. When the offset position vector to be added to the vector p is a vector $s_1$ and a vector corrected by the mapping correction unit 43 is a vector $q_1$, the mapping correction unit 43 calculates the vector $q_1$ by an equation (3) below.

[Expression 3]

$$\vec{q}_1 = \vec{p} - \vec{s}_1 \qquad \cdots (3)$$

The vector $q_1$ is obtained by adding the predetermined offset position vector $s_1$ (negative offset position vector $s_1$) to the vector p as illustrated in C of Fig. 7.

The mapping f'' performed by the combination of the omnidirectional mapping coordinate generation unit 41, the vector normalization unit 42, and the mapping correction unit 43 is processing of mapping onto the 3D model of the unit sphere (spherical surface) by using the vector $q_1$.

The calculated vector $q_1$ is equivalent to viewing the texture image arranged on the spherical surface of the unit sphere as the 3D model from a position shifted from the center (origin) by the offset position vector $s_1$.

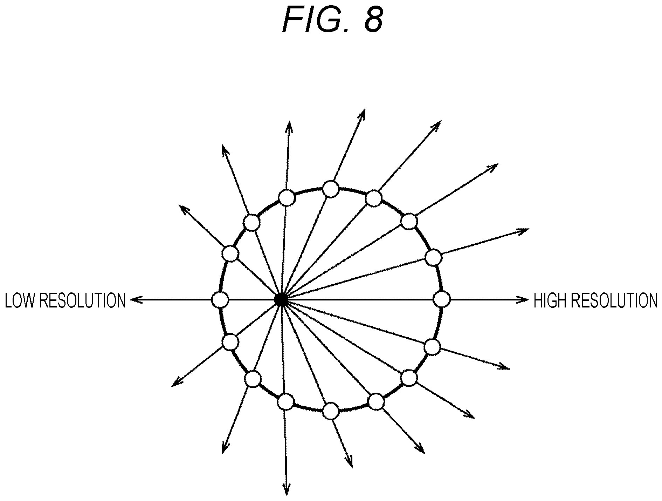

As illustrated in Fig. 8, in a case where each pixel on the spherical surface of the unit sphere is viewed from the position shifted from the center (origin) by the offset position vector $s_1$, a direction in which pixel density is of high resolution and a direction in which pixel density is of low resolution occur.

The length (magnitude) of the offset position vector $s_1$ in C of Fig. 7 corresponds to the offset distance from the center of the sphere. When the length of the offset position vector $s_1$ is 0, the viewing position remains at the center of the unit sphere, which means no conversion that does not change the resolution.

When the length of the offset position vector $s_1$ is referred to as an eccentricity ratio k, the eccentricity ratio k can take a value from the origin to the unit spherical surface, and therefore a possible value of the eccentricity ratio k is $0 \le k < 1$. The larger the eccentricity ratio k (length of the offset position vector $s_1$), the larger the difference in density between the pixels illustrated in Fig. 8, and the eccentricity ratio k represents a degree of improvement of resolution in the front direction with a resolution set uniform in all directions as a reference.

As described above, the mapping processing unit 23 executes the mapping processing of the mapping f'' corresponding to the vector $q_1$ of the equation (3), thereby generating an omnidirectional image in which a specific direction is set as the high resolution direction from the front direction image supplied from the rotation processing unit 22.

In the above-described example, an example has been described in which the 3D model of the regular octahedron is adopted, as an example of the omnidirectional image processing by the omnidirectional mapping coordinate generation unit 41.

However, the 3D model adopted by the omnidirectional mapping coordinate generation unit 41 may be any 3D model. For example, cube mapping may be used, or an equidistant cylinder may be used. However, since the equidistant cylinder is usually defined by a sphere model, there is no change in the 3D model shape even if normalization processing is performed by the vector normalization unit 42 in the subsequent stage.

In other words, since the vector normalization unit 42 that converts an arbitrary 3D model into a unit sphere model is provided in the subsequent stage of the omnidirectional mapping coordinate generation unit 41, the arbitrary 3D model can be adopted in the omnidirectional mapping coordinate generation unit 41.

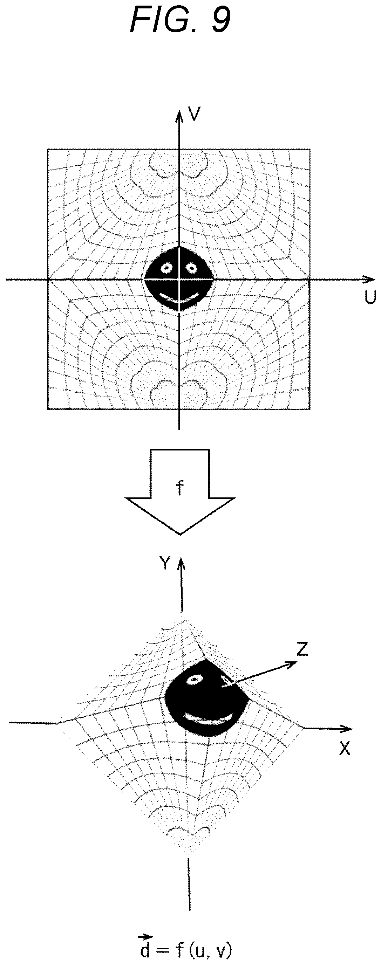

Fig. 9 is a diagram illustrating a correspondence between a two-dimensional texture image and a 3D model of the regular octahedron by the mapping processing of the mapping f by the omnidirectional mapping coordinate generation unit 41 alone.

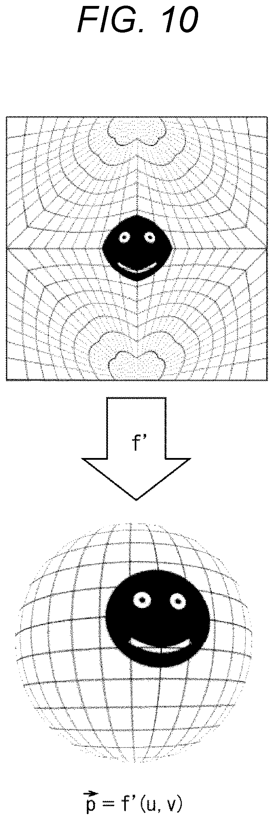

Fig. 10 is a diagram illustrating a correspondence between a two-dimensional texture image and a 3D model of a unit sphere by mapping processing of the mapping f' in which the omnidirectional image processing by the omnidirectional mapping coordinate generation unit 41 and the normalization processing by the vector normalization unit 42 are integrated together.

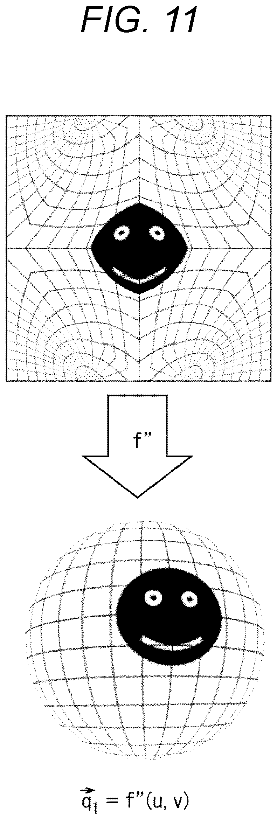

Fig. 11 is a diagram illustrating a correspondence between a two-dimensional texture image and the 3D model of the unit sphere by mapping processing of the mapping f'' in which the omnidirectional image processing by the omnidirectional mapping coordinate generation unit 41, the normalization processing by the vector normalization unit 42, and mapping correction processing by the mapping correction unit 43 are integrated together.

In Figs. 9 to 11, for the sake of explanation, auxiliary lines are drawn at equal intervals with respect to an azimuth angle that is an angle from a predetermined reference axis on a horizontal plane (XZ plane) and an elevation angle that is an angle in the vertical direction.

Although it cannot be expressed sufficiently on the drawing due to the limitation of the resolution of the drawing, the two-dimensional texture image by the mapping processing of the mapping f'' of Fig. 11 is different from the two-dimensional texture image by the mapping processing of the mapping f' of Fig. 10. Although the 3D models of Figs. 10 and 11 look the same as each other, in fact, Figs. 10 and 11 differ in the pixel density distribution.

(Configuration example of auxiliary information)

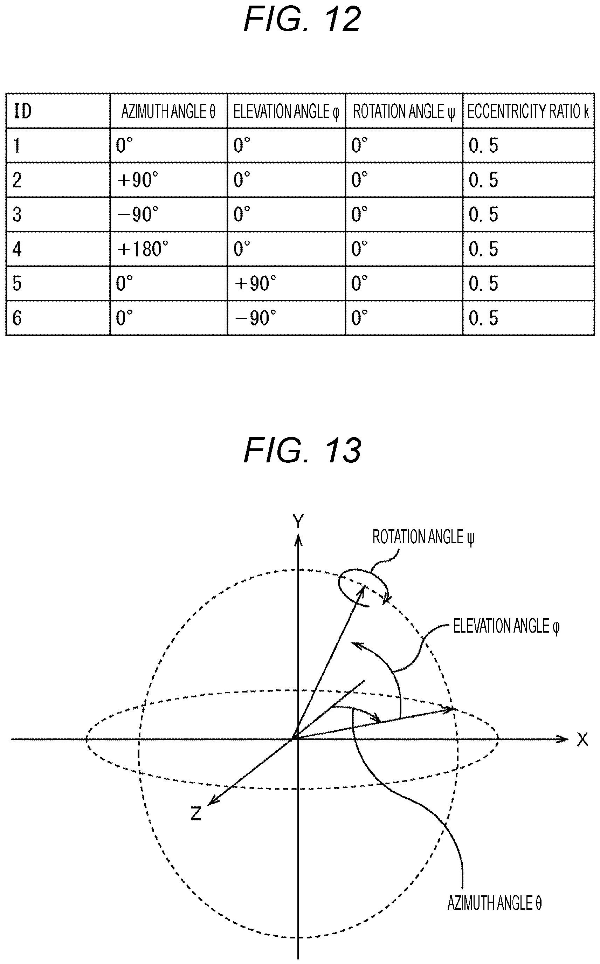

Fig. 12 is a diagram illustrating a configuration example of the auxiliary information generated by the table generation unit 26 of Fig. 2.

The table generation unit 26 generates, as the auxiliary information, a parameter table in which the information specifying the high resolution direction and the resolution improvement ratio are collected for each high resolution direction.

In the example of Fig. 12, the information specifying the high resolution direction and the resolution improvement ratio are defined for each of the six directions corresponding to the arrows dir1 to dir6 illustrated in Fig. 3. The information specifying the high resolution direction is an azimuth angle $\theta$, an elevation angle $\varphi$, and a rotation angle $\psi$, and the resolution improvement ratio is the eccentricity ratio k described above. The arrows dir1 to dir6 correspond to, for example, ID 1 to ID 6 in Fig. 12.

Fig. 13 is a diagram illustrating the azimuth angle $\theta$, the elevation angle $\varphi$, and the rotation angle $\psi$.

The azimuth angle $\theta$ is an angle from a predetermined reference axis on the XZ plane that is a horizontal plane of the 3D model coordinate system, and can take a value from -180° to +180° ($-180° \leqq \theta \leqq 180°$). In the example of Fig. 13, the clockwise direction is the positive direction.

The elevation angle $\varphi$ is an angle in the vertical direction with the XZ plane of the 3D model coordinate system as a reference plane, and can take a value from -90° to +90° ($-90° \leq \varphi \leqq 90°$). In the example of Fig. 13, the upward direction is the positive direction.

The rotation angle $\psi$ is an angle around an axis o when the axis is a line connecting the origin as a viewpoint and a point on the spherical surface, and in the example of Fig. 13, the counterclockwise direction is the positive direction.

Note that, the positive or negative sign changes depending on which of the right-handed system or left-handed system of the orthogonal coordinate system is adopted, and which direction or rotation direction is used as the positive direction in the azimuth angle $\theta$, the elevation angle $\varphi$, and the rotation angle $\psi$; however, there is no problem in defining it in any way.

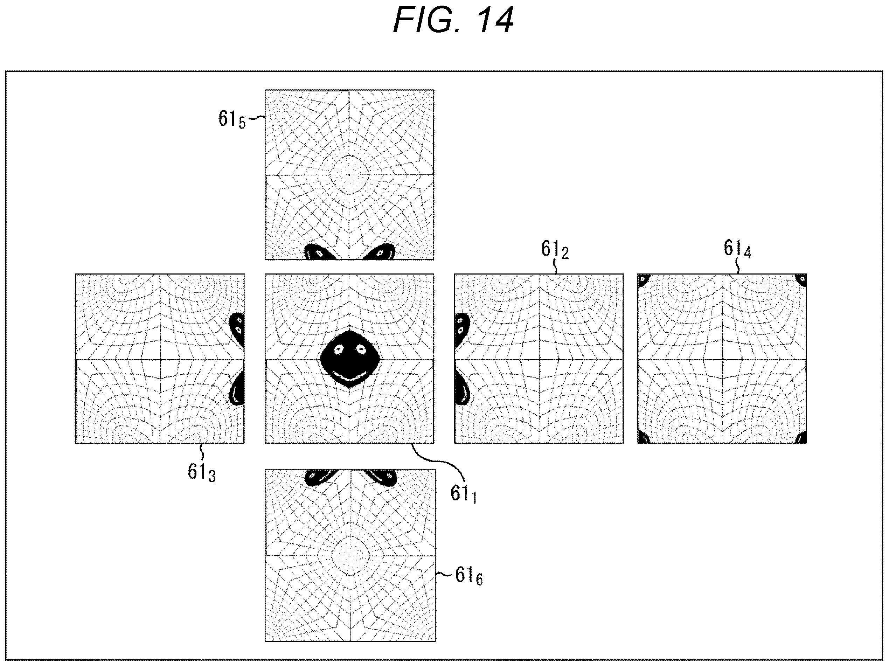

Fig. 14 illustrates an example of six omnidirectional images generated by the six rotation processing units 22, mapping processing units 23, and encoders 24.

Six omnidirectional images $61_1$ to $61_6$ illustrated in Fig. 14 are omnidirectional images having high resolution directions respectively corresponding to ID 1 to ID 6 in Fig. 12. In a case where the six omnidirectional images $61_1$ to $61_6$ are not particularly distinguished, the omnidirectional images are simply referred to as omnidirectional images 61.

In the six omnidirectional images $61_1$ to $61_6$ illustrated in Fig. 14, auxiliary lines are drawn corresponding to the latitude and longitude of a globe as a unit sphere.

The six omnidirectional images $61_1$ to $61_6$ are rotated by the rotation processing unit 22 so that the resolution direction specified by the parameter table in Fig. 12 is at the image center. It can be seen that, in the omnidirectional images 61, the distance between the auxiliary lines is wider as the lines are closer to the image center, so that the image is enlarged as the image is closer to the image center.

(Description of processing of generation device)

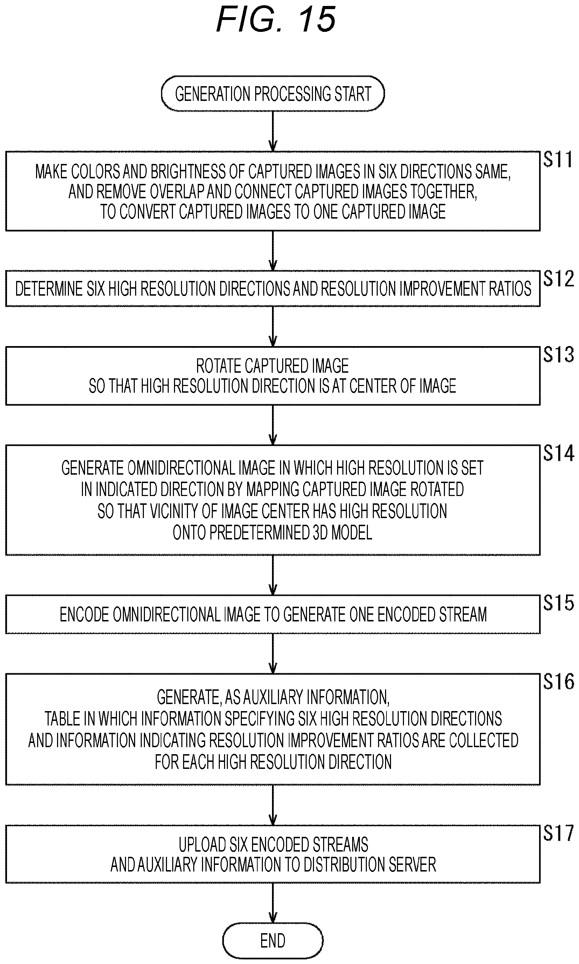

Fig. 15 is a flowchart illustrating generation processing by the generation device 12 of Fig. 2. This processing is started, for example, when moving images in six directions are supplied captured by the six cameras 11A-1 to 11A-6 of the imaging device 11.

First, in step S11, the stitching processing unit 21 makes colors and brightness of captured images in the six directions supplied from the respective cameras 11A the same for each frame, and removes overlap and connects the captured images together, to convert the captured images to one captured image. The stitching processing unit 21 generates, for example, an equirectangular image as the one captured image, and supplies the equirectangular image on a frame basis to the rotation processing unit 22.

In step S12, the setting unit 25 determines six high resolution directions and resolution improvement ratios. The setting unit 25 supplies the determined six high resolution directions one by one to the rotation processing units 22-1 to 22-6, and supplies the determined resolution improvement ratios to the mapping processing units 23-1 to 23-6. Furthermore, the setting unit 25 also supplies the determined six high resolution directions and resolution improvement ratios to the table generation unit 26.

In step S13, the rotation processing unit 22 rotates the captured image (for example, the equirectangular image) on the frame basis supplied from the stitching processing unit 21 so that the high resolution direction indicated by the setting unit 25 is at the center of the image.

In step S14, the mapping processing unit 23 generates an omnidirectional image in which high resolution is set in the direction indicated from the setting unit 25 by mapping the captured image rotated so that the vicinity of the image center has high resolution onto a predetermined 3D model.

Specifically, the mapping processing unit 23 calculates the vector $q_1$ of the equation (3), and executes processing of mapping the front direction image supplied from the rotation processing unit 22 onto a unit sphere by using the vector $q_1$ obtained as a result of the calculation, thereby executing mapping processing of the mapping f'' in which 3D model mapping processing by the omnidirectional mapping coordinate generation unit 41, normalization processing by the vector normalization unit 42, and mapping correction processing by the mapping correction unit 43 are integrated together.

In step S15, the encoder 24 encodes the omnidirectional image supplied from the mapping processing unit 23 with a predetermined encoding method such as the MPEG2 method or the AVC method, to generate one encoded stream. The encoder 24 supplies the generated one encoded stream to the transmission unit 27.

In steps S13 to S15, the provided six each of the rotation processing units 22, the mapping processing units 23, and the encoders 24 perform processing in parallel on the captured images having the different high resolution directions (front directions).

In step S16, the generation table generation unit 26 generates, as auxiliary information, a parameter table in which information specifying the six high resolution directions and information indicating the resolution improvement ratios are collected for each high resolution direction, and supplies the auxiliary information to the transmission unit 27.

In step S17, the transmission unit 27 uploads a total of six encoded streams supplied from the six encoders 24, and the auxiliary information supplied from the table generation unit 26 to the distribution server 13.

(Configuration example of distribution server and reproduction device)

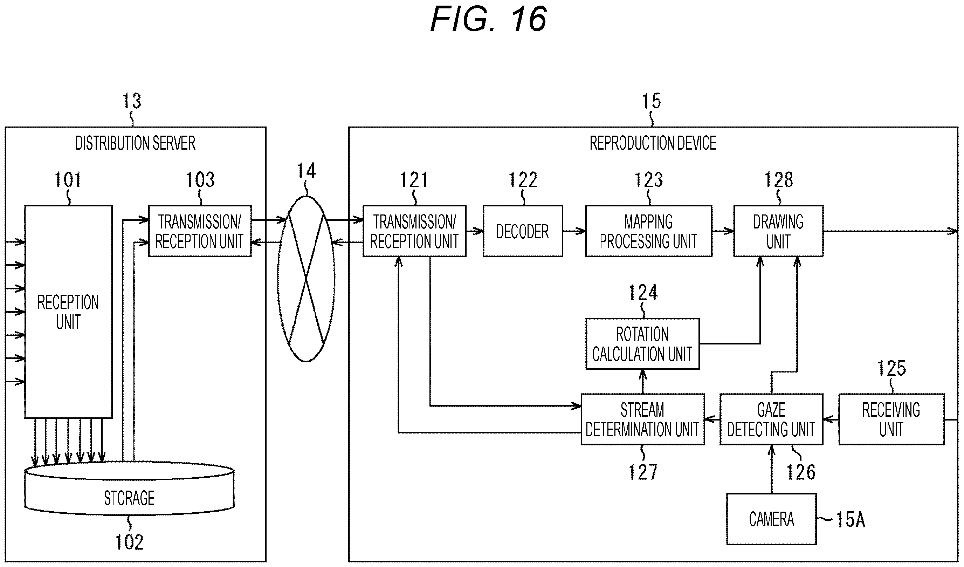

Fig. 16 is a block diagram illustrating a configuration example of the distribution server 13 and the reproduction device 15 of Fig. 1.

The distribution server 13 includes a reception unit 101, a storage 102, and a transmission/reception unit 103.

The reception unit 101 receives six encoded streams and auxiliary information uploaded from the generation device 12 of Fig. 1, and supplies the streams and information to the storage 102.

The storage 102 stores the six encoded streams and the auxiliary information supplied from the reception unit 101.

In response to a request from the reproduction device 15, the transmission/reception unit 103 reads the auxiliary information stored in the storage 102, and transmits the auxiliary information to the reproduction device 15 via the network 14.

Furthermore, in response to the request from the reproduction device 15, the transmission/reception unit 103 reads one predetermined encoded stream among the six encoded streams stored in the storage 102, and transmits the predetermined encoded stream to the reproduction device 15 via the network 14. The one encoded stream transmitted to the reproduction device 15 by the transmission/reception unit 103 is appropriately changed in response to the request from the reproduction device 15.

Note that, the change of the encoded stream to be transmitted is performed at a sync point. Thus, the change of the encoded stream to be transmitted is performed on several frames to several tens of frames basis. Furthermore, as described above, the sync points are the same as each other among the six encoded streams. Thus, the transmission/reception unit 103 can easily switch the captured image to be reproduced in the reproduction device 15 by switching the encoded stream to be transmitted at the sync point.

The reproduction device 15 includes the camera 15A, a transmission/reception unit 121, a decoder 122, a mapping processing unit 123, a rotation calculation unit 124, a receiving unit 125, a gaze detecting unit 126, a stream determination unit 127, and a drawing unit 128.

The transmission/reception unit 121 (receiving unit) of the reproduction device 15 requests the distribution server 13 to transmit auxiliary information via the network 14, and receives the auxiliary information transmitted from the transmission/reception unit 103 of the distribution server 13 in response to the request. The transmission/reception unit 121 supplies the acquired auxiliary information to the stream determination unit 127.

Furthermore, stream selection information is supplied from the stream determination unit 127 to the transmission/reception unit 121, the stream selection information indicating which one encoded stream is to be acquired among the six encoded streams that can be acquired from the distribution server 13.

The transmission/reception unit 121 requests the distribution server 13 via the network 14 to transmit the one encoded stream determined on the basis of the stream selection information, and receives the one encoded stream transmitted from the transmission/reception unit 103 of the distribution server 13 in response to the request. The transmission/reception unit 121 supplies the acquired one encoded stream to the decoder 122.

The decoder 122 (decoding unit) decodes the encoded stream supplied from the transmission/reception unit 121, to generate an omnidirectional image in which high resolution is set in a predetermined direction. The generated omnidirectional image is an omnidirectional image having a high resolution direction in a direction closest to a current gaze direction of the viewer among the high resolution directions of the respective six encoded streams that can be acquired from the distribution server 13. The decoder 122 supplies the generated omnidirectional image to the mapping processing unit 123.

The mapping processing unit 123 generates a 3D model image by mapping as a texture an omnidirectional image supplied from the decoder 122 onto the spherical surface of a unit sphere as a 3D model, and supplies the 3D model image to the drawing unit 128.

More specifically, the mapping processing unit 123, similarly to the mapping processing unit 23 of the generation device 12, executes mapping processing of mapping the omnidirectional image supplied from the decoder 122 by the mapping f'' using the vector $q_1$ of the equation (3). The 3D model image obtained by the mapping is an image in which a predetermined direction close to the current gaze direction of the viewer is set as the high resolution direction.

The rotation calculation unit 124 acquires, from the stream determination unit 127, information specifying the high resolution direction of the one encoded stream received by the transmission/reception unit 121, generates rotation information corresponding to the high resolution direction, and supplies the rotation information to the drawing unit 128.

In other words, the six encoded streams acquired from the distribution server 13 are subjected to rotation processing by the rotation processing unit 22 of the generation device 12 so that the same (common) direction in the 3D model coordinate system is the high resolution direction, and then subjected to the mapping processing. Therefore, the rotation calculation unit 124 generates rotation information for returning to the original direction of the 3D model coordinate system on the basis of the information specifying the high resolution direction supplied from the stream determination unit 127, and supplies the rotation information to the drawing unit 128.

The receiving unit 125 receives a detection result of the gyro sensor 16B in Fig. 1 from the head mounted display 16, and supplies the detection result to the gaze detecting unit 126.

The gaze detecting unit 126 determines a gaze direction of the viewer in the 3D model coordinate system on the basis of the detection result of the gyro sensor 16B supplied from the receiving unit 125, and supplies the determined direction to the stream determination unit 127. Furthermore, the gaze detecting unit 126 acquires a captured image of the marker 16A from the camera 15A, and detects a viewing position in the coordinate system of the 3D model on the basis of the captured image.

Furthermore, the gaze detecting unit 126 determines a visual field range of the viewer in the 3D model coordinate system on the basis of the viewing position and the gaze direction in the 3D model coordinate system. The gaze detecting unit 126 supplies the visual field range and the viewing position of the viewer to the drawing unit 128.

The stream determination unit 127 is supplied with the auxiliary information from the transmission/reception unit 121, and is supplied with the gaze direction of the viewer from the gaze detecting unit 126.

The stream determination unit 127 (selection unit) determines (selects) an encoded stream having a high resolution direction closest to the gaze direction of the viewer among the six encoded streams that can be acquired from the distribution server 13, on the basis of the gaze direction of the viewer and the auxiliary information. In other words, the stream determination unit 127 determines one encoded stream of which the front of the image perspectively projected onto the visual field range of the viewer has high resolution.

The stream determination unit 127 supplies stream selection information indicating the selected encoded stream to the transmission/reception unit 121.

Furthermore, the stream determination unit 127 supplies information specifying the high resolution direction of the selected encoded stream to the rotation calculation unit 124. Specifically, the stream determination unit 127 supplies the azimuth angle $\theta$, the elevation angle $\varphi$, and the rotation angle $\psi$ of the auxiliary information corresponding to the selected encoded stream to the rotation calculation unit 124. The rotation calculation unit 124 generates rotation information on the basis of the information specifying the high resolution direction supplied from the stream determination unit 127.

Note that, the stream determination unit 127 may also supply the stream selection information to the rotation calculation unit 124, and the rotation calculation unit 124 may generate the rotation information by referring to the parameter table of Fig. 12 stored by the stream determination unit 127 from the acquired stream selection information.

The drawing unit 128 generates an image of the visual field range of the viewer as the display image, by perspectively projecting the 3D model image supplied from the mapping processing unit 123 onto the visual field range of the viewer, with the viewing position supplied from the gaze detecting unit 126 as a focal point.

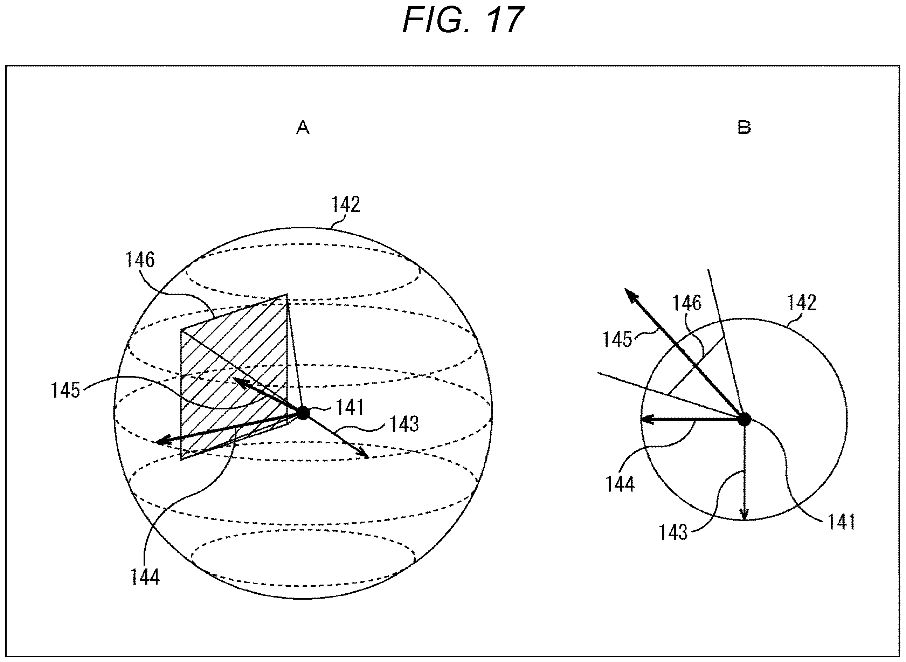

Processing of the drawing unit 128 will be described with reference to Fig. 17.

A of Fig. 17 is a conceptual diagram of a 3D model image supplied from the mapping processing unit 123, and B of Fig. 17 is a horizontal cross-sectional view passing through the origin of the unit sphere of A of Fig. 17.

As illustrated in Fig. 17, in the 3D model image supplied from the mapping processing unit 123, a two-dimensional texture image for mapping processing of the mapping f" is pasted on a spherical surface 142 of the unit sphere with a center point 141. The center point 141 of the unit sphere corresponds to a viewing position (viewpoint) of the viewer.

In the 3D model image supplied from the mapping processing unit 123, a predetermined direction of the spherical surface 142 of the unit sphere, for example, a direction indicated by an arrow 143 is the high resolution direction. The direction of the arrow 143 is a direction of the image center of the two-dimensional texture image, and is a direction common to six 3D model images corresponding to the six encoded streams, but is a direction unrelated to the gaze direction of the viewer.

The drawing unit 128 rotates the 3D model image in accordance with the rotation information supplied from the rotation calculation unit 124. In the example of Fig. 17, the two-dimensional texture image in the direction indicated by the arrow 143 is rotated (moved) in the direction indicated by an arrow 144, and a high resolution portion of the two-dimensional texture image is in a direction close to a gaze direction 145 of the viewer.

In other words, the drawing unit 128 rotates the high resolution portion of the 3D model image supplied from the mapping processing unit 123 so that the portion is in the original direction of the arrows dir1 to dir6 of Fig. 3. The high resolution direction (direction indicated by the arrow 144) of the one encoded stream selected by the stream determination unit 127 is a direction closet to the gaze direction 145 of the viewer among the arrows dir1 to dir6 corresponding to the resolution directions of the six encoded streams.

Next, the drawing unit 128 perspectively projects the rotated 3D model image onto a visual field range 146 of the viewer on the basis of the visual field range and viewing position of the viewer supplied from the gaze detecting unit 126. As a result, an image is generated as the display image, the image being mapped onto the unit sphere and viewed from the center point 141 that is the viewing position through the visual field range 146 of the viewer. The generated display image is supplied to the head mounted display 16.


(Description of processing of reproduction device)


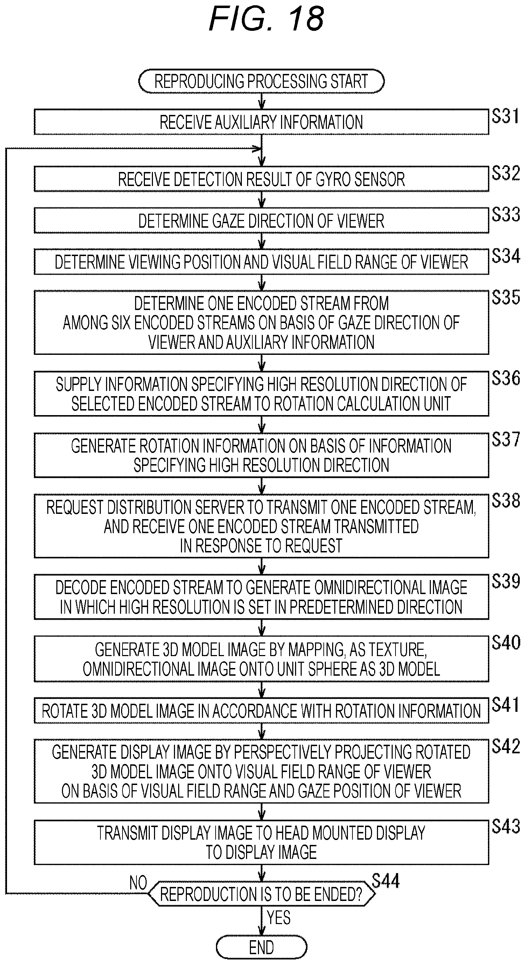

Fig. 18 is a flowchart illustrating reproduction processing by the reproduction device 15 of Fig. 16. The reproduction processing is started, for example, when power on or processing start operation is detected in the reproduction device 15.

First, in step S31, the transmission/reception unit 121 requests the distribution server 13 to transmit auxiliary information, and receives the auxiliary information transmitted from the transmission/reception unit 103 of the distribution server 13 in response to the request. The transmission/reception unit 121 supplies the acquired auxiliary information to the stream determination unit 127.

In step S32, the receiving unit 125 receives a detection result of the gyro sensor 16B in Fig. 1 from the head mounted display 16 and supplies the detection result to the gaze detecting unit 126.

In step S33, the gaze detecting unit 126 determines a gaze direction of the viewer in the coordinate system of the 3D model on the basis of the detection result of the gyro sensor 16B supplied from the receiving unit 125, and supplies the gaze direction to the stream determination unit 127.

In step S34, the gaze detecting unit 126 determines a viewing position and a visual field range of the viewer in the coordinate system of the 3D model, and supplies the viewing position and the visual field range to the drawing unit 128. More specifically, the gaze detecting unit 126 acquires a captured image of the marker 16A from the camera 15A, and detects the viewing position in the coordinate system of the 3D model on the basis of the captured image. Then, the gaze detecting unit 126 determines the visual field range of the viewer in the 3D model coordinate system on the basis of the detected viewing position and the gaze direction.

In step S35, the stream determination unit 127 determines (selects) one encoded stream from among six encoded streams that can be acquired from the distribution server 13 on the basis of the gaze direction of the viewer and the auxiliary information. In other words, the stream determination unit 127 determines (selects) an encoded stream having a high resolution direction closest to the gaze direction of the viewer from among the six encoded streams. Then, the stream determination unit 127 supplies stream selection information indicating the selected encoded stream to the transmission/reception unit 121.

In step S36, the stream determination unit 127 supplies information specifying the high resolution direction of the selected encoded stream to the rotation calculation unit 124.

In step S37, the rotation calculation unit 124 generates rotation information on the basis of the information specifying the high resolution direction supplied from the stream determination unit 127, and supplies the rotation information to the drawing unit 128.

In step S38, the transmission/reception unit 121 requests the distribution server 13 via the network 14 to transmit one encoded stream corresponding to the stream selection information supplied from the stream determination unit 127, and receives the one encoded stream transmitted from the transmission/reception unit 103 of the distribution server 13 in response to the request. The transmission/reception unit 121 supplies the acquired one encoded stream to the decoder 122.

In step S39, the decoder 122 decodes the encoded stream supplied from the transmission/reception unit 121, generates an omnidirectional image in which high resolution is set in a predetermined direction, and supplies the omnidirectional image to the mapping processing unit 123.

The order of the processing of steps S36 and S37 and the processing of steps S38 and 39 may be reversed. Furthermore, the processing of steps S36 and S37 and the processing of steps S38 and 39 can be executed in parallel.

In step S40, the mapping processing unit 123 generates a 3D model image in which a two-dimensional texture image is pasted on the spherical surface of a unit sphere, by mapping as a texture the omnidirectional image supplied from the decoder 122 onto the unit sphere as the 3D model, and supplies the 3D model image to the drawing unit 128.

Specifically, the mapping processing unit 123 executes mapping processing of the mapping f'' using the vector $q_1$ of the equation (3), and maps the omnidirectional image supplied from the decoder 122 onto the unit sphere.

In step S41, the drawing unit 128 rotates the 3D model image supplied from the mapping processing unit 123 in accordance with the rotation information supplied from the rotation calculation unit 124.

In step S42, the drawing unit 128 generates a display image by perspectively projecting the rotated 3D model image onto the visual field range of the viewer on the basis of the visual field range and viewing position of the viewer supplied from the gaze detecting unit 126.

In step S43, the drawing unit 128 transmits the display image to the head mounted display 16 to display the image.

In step S44, the reproduction device 15 determines whether or not reproduction is to be ended. For example, the reproduction device 15 determines to end the reproduction when operation to end the reproduction is performed by the viewer.

In a case where it is determined in step S44 that the reproduction is not to be ended, the processing returns to step S32, and the above-described processing of steps S32 to S44 is repeated. On the other hand, in a case where it is determined in step S44 that the reproduction is to be ended, the reproduction processing is ended.

(Modification of first embodiment)

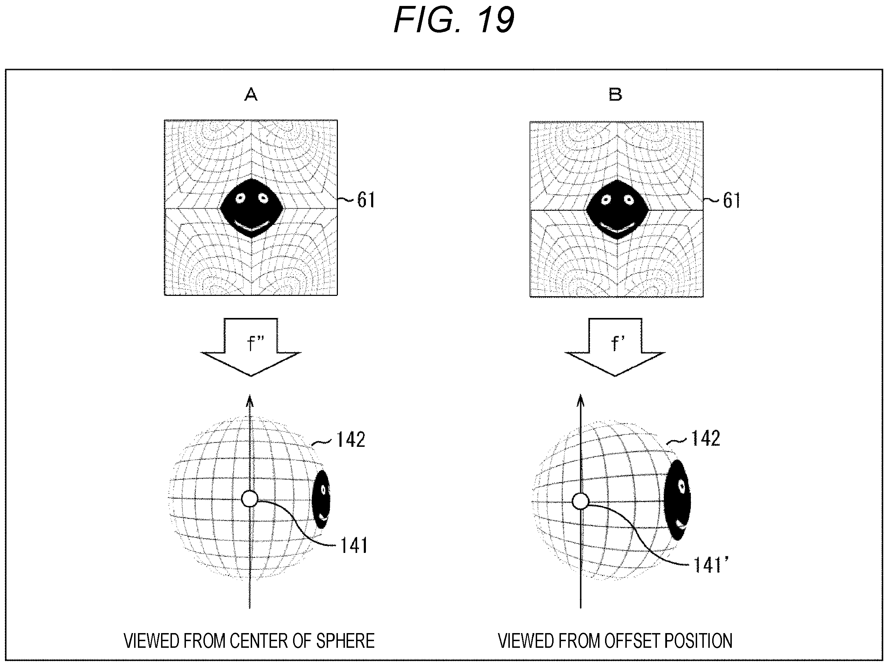

A modification of the above-described first embodiment will be described with reference to Figs. 19 to 21.

In the first embodiment described above, the reproduction device 15 generates the display image of when the viewer views the gaze direction with the center position of the sphere as the viewing position, by acquiring the omnidirectional image on which the mapping processing of the mapping f'' is executed from the distribution server 13, and mapping as a texture the omnidirectional image onto the unit sphere as the 3D model.

The equation for obtaining the vector $q_1$ of the equation (3) corresponding to the mapping processing of the mapping f'' is simply vector addition in which the vector $s_1$ (negative vector $s_1$) is added to the vector p. The addition of the vector $s_1$ is equivalent to operation of moving the viewing position of the 3D model of the unit sphere of the vector p on the reproduction side.

In other words, the reproduction processing described above is processing in which the reproduction device 15 pastes the omnidirectional image (two-dimensional texture image) 61 for the mapping processing of the mapping f'' onto the spherical surface 142 of the unit sphere as the 3D model by the mapping processing of the mapping f'', to generate, as the display image, an image viewed by the viewer from the center point 141 of the unit sphere, as illustrated in A of Fig. 19.

On the other hand, the same display image can be generated even when the reproduction device 15 pastes the omnidirectional image (two-dimensional texture image) 61 for the mapping processing of the mapping f' onto the spherical surface 142 of the unit sphere as the 3D model by the mapping processing of the mapping f', to generate, as the display image, an image viewed by the viewer from a position 141' offset by a predetermined amount from the center point 141 of the unit sphere (hereinafter referred to as the offset viewing position 141'), as illustrated in B of Fig. 19.

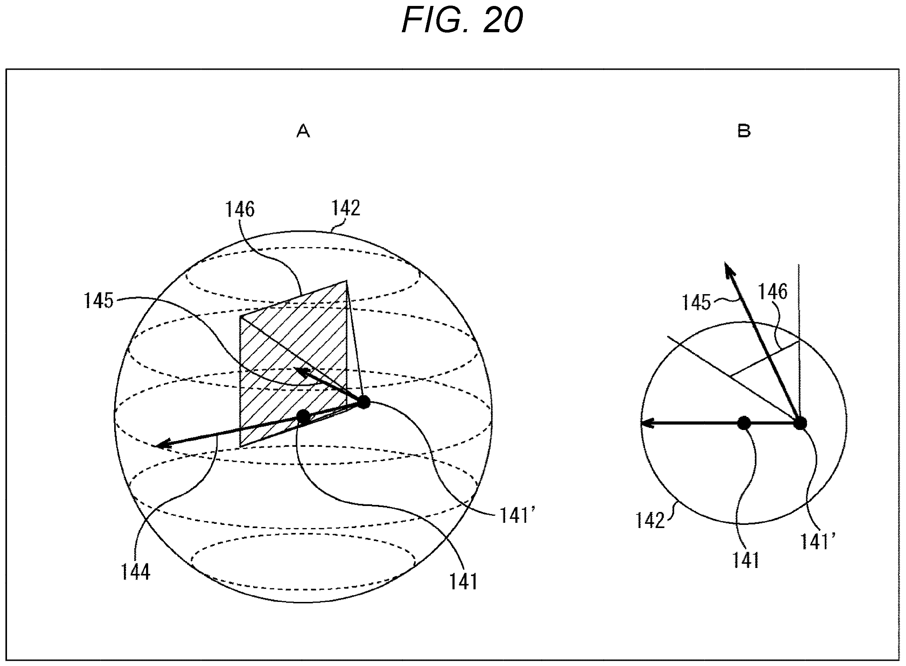

Fig. 20 illustrates a relationship between the 3D model and the viewpoint at the time of reproduction corresponding to Fig. 17 in the reproduction processing illustrated in B of Fig. 19 (hereinafter referred to as reproduction processing by viewpoint movement).

Furthermore, an amount of offset from the center point 141 of the unit sphere to the offset viewing position 141' corresponds to the vector $s_1$ of the equation (3), and also corresponds to the eccentricity ratio k of the parameter table of Fig. 12.

In a case where the reproduction device 15 executes the reproduction processing by viewpoint movement described with reference to B of Fig. 19, the rotation calculation unit 124 calculates the amount of offset on the basis of the eccentricity ratio k of the parameter table, in addition to rotation information based on the information specifying the high resolution direction acquired from the stream determination unit 127, and supplies the rotation information and the amount of offset as movement information to the drawing unit 128.

The mapping processing unit 123 executes the mapping processing of the mapping f' using the vector p of the equation (2) on the omnidirectional image supplied from the decoder 122, and supplies a 3D model image obtained as a result of the execution to the drawing unit 128. The mapped 3D model image is an image in which a predetermined direction close to the current gaze direction of the viewer is set as the high resolution direction.

The drawing unit 128 rotates the 3D model image supplied from the mapping processing unit 123 in accordance with the rotation information supplied from the rotation calculation unit 124, and offsets the viewing position from the center of the unit sphere in accordance with the movement information.

Then, the drawing unit 128 generates an image of the visual field range of the viewer as the display image, by perspectively projecting the rotated 3D model image onto the visual field range of the viewer from the viewing position after the offset movement.

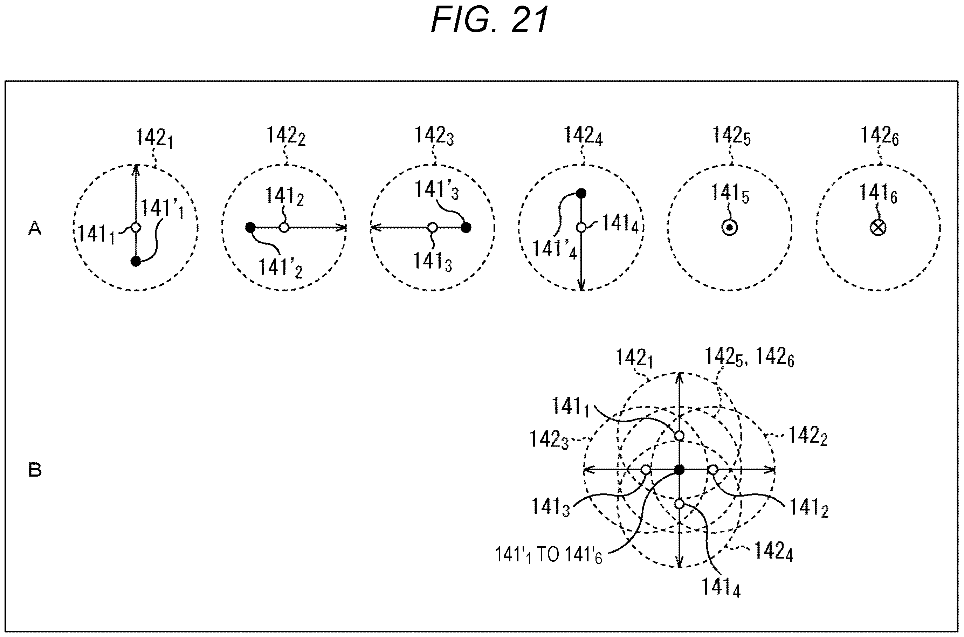

A of Fig. 21 is a diagram illustrating a positional relationship between the center point 141 of the unit sphere, the offset viewing position 141', and the spherical surface 142 of the unit sphere as the 3D model in the case of drawing by the reproduction processing by viewpoint movement described above, for six encoded streams corresponding to ID 1 to ID 6 of Fig. 12.

In A of Fig. 21, the center points 141, the offset viewing positions 141', and the spherical surfaces 142 of the unit spheres of the six encoded streams of ID 1 to ID 6 are respectively indicated by center points $141_1$ to $141_6$, offset viewing positions $141_1'$ to $141_6'$, and spherical surfaces $142_1$ to $142_6$ of the unit spheres.

Note that, the offset viewing positions $141_5'$ and $141_6'$ are in the direction perpendicular to the page surface and are not illustrated.

B of Fig. 21 is a diagram illustrating the spherical surfaces $142_1$ to $142_6$ of the unit spheres, with the offset viewing positions $141_1'$ to $141_6'$ as references that are the viewing positions of the viewer.

With the offset viewing positions $141_1'$ to $141_6'$ as references that are the viewing positions of the viewer, parallel movement processing is performed, so that the spherical surfaces $142_1$ to $142_6$ of the unit spheres are all positioned at shifted positions.

In comparison with the reproduction processing of A of Fig. 19 that is the basic form of the first embodiment, a merit of the reproduction processing by viewpoint movement illustrated in B of Fig. 19 is that it is not necessary to perform processing of pasting the two-dimensional texture image onto the unit sphere as the 3D model for each of the six encoded streams.

In other words, the amount of offset from the center point 141 of the unit sphere to the offset viewing position 141' corresponds to the length of the vector $s_1$ of the equation (3) and the eccentricity ratio k of the parameter table of Fig. 12, and as is apparent from the equation (2) that is the calculation equation of the vector p, the mapping processing of the mapping f' does not depend on the vector $s_1$ and the eccentricity ratio k.

Thus, switching of the six encoded streams is possible only by performing processing of moving the 3D model image obtained by executing the mapping processing of the mapping f' by the amount of offset corresponding to the eccentricity ratio k. Therefore, when the switching of the six encoded streams becomes necessary, the encoded streams can be switched by only the reproduction device 15 without requesting the distribution server 13 to transmit a new encoded stream.

<2. Direction of mapping of mapping processing unit of generation device and reproduction device>

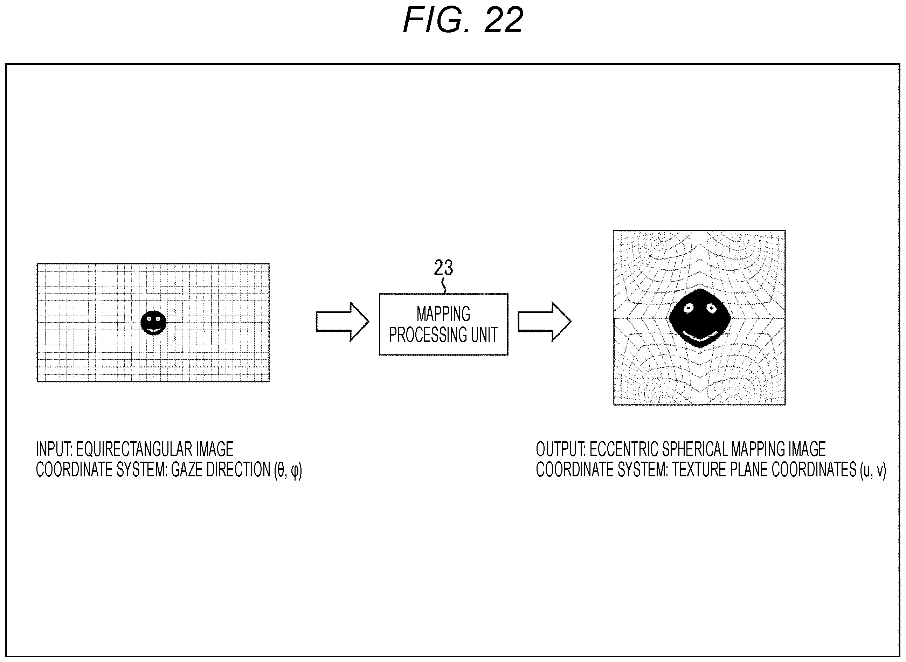

By the way, the image input to the mapping processing unit 23 of the generation device 12 is a captured image such as an equirectangular image as illustrated in Fig. 22, and a position on the captured image is determined by a gaze direction including the azimuth angle $\theta$ and the elevation angle $\varphi$ with the viewing position as a reference.

The image output by the mapping processing unit 23 of the generation device 12 is a two-dimensional texture image (eccentric spherical mapping image) mapped to be viewed from a position shifted by the offset position vector $s_1$ from the center of the unit sphere, onto the spherical surface of the unit sphere as the 3D model, and a position on the two-dimensional texture image is defined by the plane coordinate system of the U-axis and the V-axis.

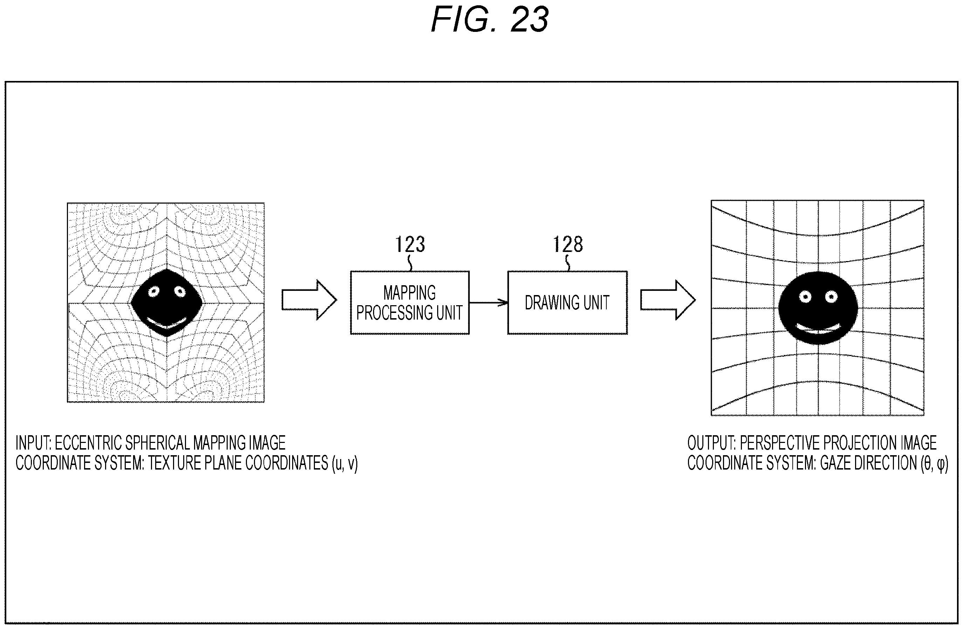

On the other hand, as illustrated in Fig. 23, the image input to the mapping processing unit 123 of the reproduction device 15 is a two-dimensional texture image (eccentric spherical mapping image) mapped to be viewed from a position shifted by the offset position vector $s_1$ from the center of the unit sphere, onto the spherical surface of the unit sphere as the 3D model, and a position on the two-dimensional texture image is defined by the plane coordinate system of the U-axis and the V-axis.

Then, the image output from the drawing unit 128 of the reproduction device 15 is an image of the 3D model image perspectively projected onto the visual field range of the viewer, and is determined by the gaze direction including the azimuth angle θ and the elevation angle φ with the viewing position as a reference.

Thus, the coordinate system of the input/output is reversed between the mapping processing unit 23 of the generation device 12 and the mapping processing unit 123 of the reproduction device 15, and although basically the processing is performed in the opposite direction, the mapping processing unit 23 of the generation device 12 and the mapping processing unit 123 of the reproduction device 15 both execute the mapping processing of the mapping f". The reason will be described why the mapping processing unit 23 of the generation device 12 and the mapping processing unit 123 of the reproduction device 15 can perform processing without using an inverse mapping f"$^{-1}$.

The mapping processing unit 23 of the generation device 12 performs backward mapping that loops the (u, v) coordinates of the two-dimensional texture image to be output, and calculates which position of the input captured image corresponds to each pixel of the two-dimensional texture image. In two-dimensional image processing, processing of calculating output pixel values one by one is normal processing.

On the other hand, the mapping processing unit 123 of the reproduction device 15 performs forward mapping that loops the (u, v) coordinates of the input two-dimensional texture image, and arranges vertices of the 3D model in accordance with information of the (u, v) coordinates and three-dimensional coordinate position (x, y, z) of the 3D model, for each pixel of the two-dimensional texture image. In three-dimensional CG processing, processing of arranging vertices of a model on a three-dimensional space is often performed and can be calculated by forward processing.

Thus, the generation device 12 side processes forward processing by the backward mapping, and the reproduction device 15 side processes backward processing by the forward mapping, so that the mappings used match each other. As a result, implementation is possible by using only the mapping f".

<3. Second embodiment>

(Configuration example of second embodiment)

Next, a second embodiment will be described of a distribution system to which the present disclosure is applied.

Note that, in the second embodiment, description will be made for only portions different from the first embodiment described above.

The generation device 12 of the distribution system 10 according to the second embodiment is different in part of the mapping processing unit 23 from that of the first embodiment described above. Therefore, only the mapping processing unit 23 will be described for the generation device 12.

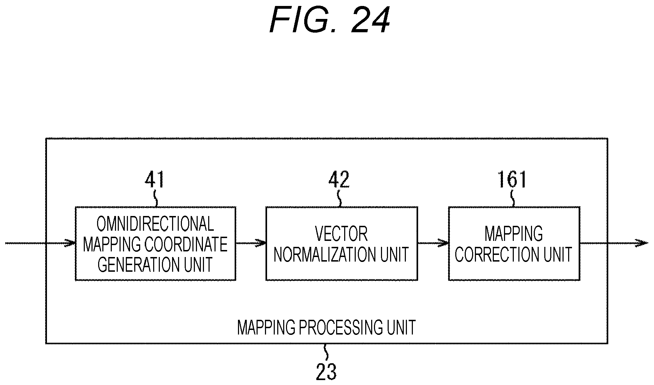

Fig. 24 is a block diagram illustrating a configuration example of the mapping processing unit 23 according to the second embodiment.

The mapping processing unit 23 in Fig. 24 includes the omnidirectional mapping coordinate generation unit 41, the vector normalization unit 42, and a mapping correction unit 161. Thus, as compared with the mapping processing unit 23 according to the first embodiment illustrated in Fig. 4, only the mapping correction unit 161 is different, and the omnidirectional mapping coordinate generation unit 41 and the vector normalization unit 42 are similar to those of the first embodiment.

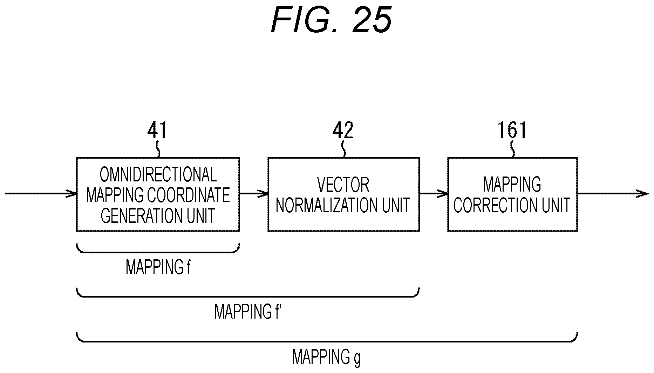

In other words, as illustrated in Fig. 25, when a mapping performed by a combination of the omnidirectional mapping coordinate generation unit 41, the vector normalization unit 42, and the mapping correction unit 161 is defined as a mapping g, the mapping f performed by the omnidirectional mapping coordinate generation unit 41 alone, and the mapping f' performed by the combination of the omnidirectional mapping coordinate generation unit 41 and the vector normalization unit 42 are similar to those in the first embodiment, and the mapping g including the correction unit 161 is different from the mapping f" in the first embodiment.

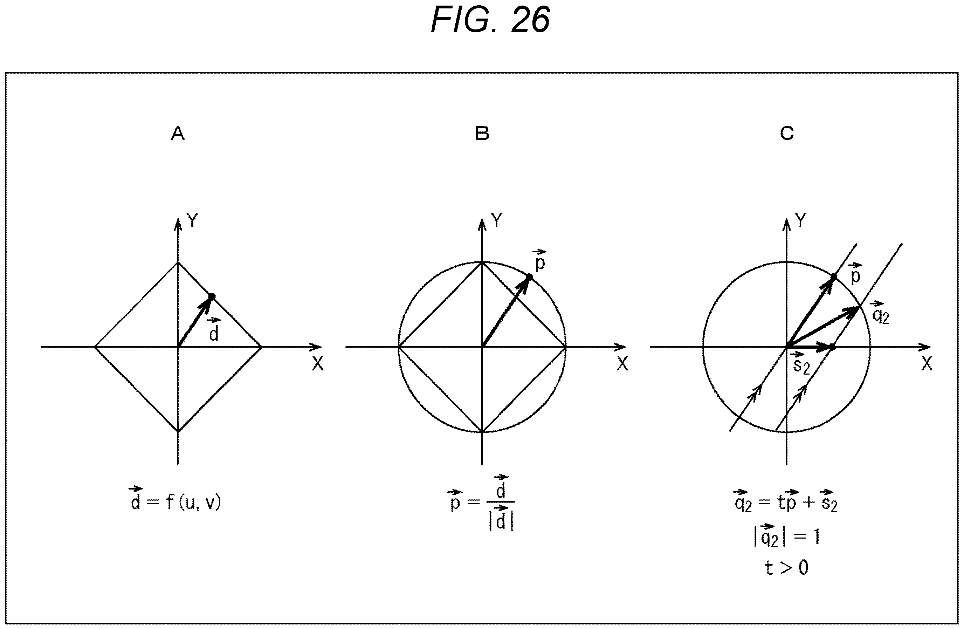

A of Fig. 26 illustrates the vector d corresponding to the mapping f performed by the omnidirectional mapping coordinate generation unit 41 alone.

B of Fig. 26 illustrates the vector p corresponding to the mapping f' performed by the combination of the omnidirectional mapping coordinate generation unit 41 and the vector normalization unit 42.

C of Fig. 26 illustrates a vector $q_2$ corresponding to the mapping g performed by the combination of the omnidirectional mapping coordinate generation unit 41, the vector normalization unit 42, and the mapping correction unit 161.

When an offset position vector in the second embodiment is a vector $s_2$, the vector $q_2$ corresponding to the mapping g is expressed by an equation (4) below.

[Expression 4]

$$\vec{q}_2 = t\vec{p} + \vec{s}_2 \qquad \cdots (4)$$

The vector $q_2$ is a vector directed from the center of the unit sphere to an intersection of a straight line extended in a direction of the vector p from the offset position vector $s_2$ and the unit spherical surface.

Here, since the vector $q_2$ is a point on the spherical surface of the unit sphere, the condition of an equation (5) is satisfied.

[Expression 5]

$$|\vec{q_2}| = 1 \qquad \cdots (5)$$

Furthermore, since the intersection is a point where a straight line extended in the same direction as the direction of the vector p intersects with the unit spherical surface, a parameter t satisfies the following.

$$t > 0 \quad \ldots\ldots(6)$$

Thus, the vector $q_2$ of the equation (4) is obtained by adding the offset position vector $s_2$ to the vector p multiplied by a positive constant.

By assigning the equation (4) into the equation (5), an equation (7) is obtained,

[Equation 6]

$$(t\vec{p}+\vec{s})(t\vec{p}+\vec{s}) = 1 \qquad \cdots (7)$$

and an equation (8) is obtained that is a quadratic equation for t.

[Expression 7]

$$|\vec{p}|^2 t^2 + 2(\vec{s}\cdot\vec{p})t + |\vec{s}|^2 - 1 = 0 \qquad \cdots (8)$$

In the equation (8), which is the quadratic equation for t, when a coefficient of $t^2$, a coefficient of t, and a constant term are defined as

[Equation 8]

$$a = |\vec{p}|^2$$

$$b = 2(\vec{s}\cdot\vec{p})$$

$$c = |\vec{s}|^2 - 1$$

t can be obtained as follows, from the formula of the solution of the quadratic equation.

[Expression 9]

$$t = \frac{-b + \sqrt{b^2 - 4ac}}{2a} \qquad \cdots (9)$$

If t is obtained, the vector $q_2$ can be obtained by the equation (4), so that mapping processing can be executed of the mapping g using the vector $q_2$.

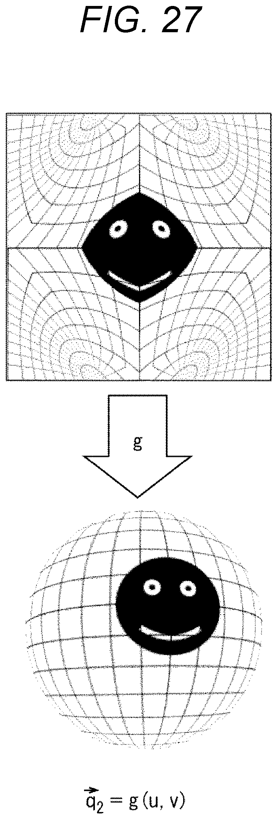

Fig. 27 is a diagram illustrating a correspondence between a two-dimensional texture image and the 3D model of the unit sphere by mapping processing of the mapping g in which the omnidirectional image processing by the omnidirectional mapping coordinate generation unit 41, the normalization processing by the vector normalization unit 42, and mapping correction processing by the mapping correction unit 161 are integrated together.

Fig. 27 is a diagram corresponding to Fig. 11 in the first embodiment; however, a distortion degree of the two-dimensional texture image is a little different from that of Fig. 11 due to a difference between the vector $q_1$ of the equation (3) and the vector $q_2$ of the equation (4).

(Description of processing of generation device)

Since generation processing of the generation device 12 in the second embodiment is similar to the processing described with reference to the flowchart in Fig. 15 in the first embodiment, the description thereof will be omitted.
However, in the generation processing of the second embodiment, instead of executing the mapping processing of the mapping f" using the vector $q_1$ of the equation (3) in step S14, the mapping processing is executed of the mapping g using the vector $q_2$ of the equation (4).

(Description of reproduction device)

The reproduction device 15 will be described of the distribution system 10 according to the second embodiment.
The reproduction device 15 of the distribution system 10 according to the second embodiment is also different in part of the mapping processing unit 123 from that of the first embodiment described above.
Similarly to that the mapping processing unit 123 in the first embodiment has the configuration similar to that of the mapping processing unit 23 of the generation device 12 in the first embodiment, the mapping processing unit 123 according to the second embodiment has a configuration similar to that of the mapping processing unit 23 of the generation device 12 in the second embodiment.
In other words, the mapping processing unit 123 according to the second embodiment has the same configuration as that of the mapping processing unit 23 illustrated in Fig. 24, and executes the mapping processing of the mapping g using the vector $q_2$ of the equation (4).

(Description of processing of reproduction device)

Since reproduction processing of the reproduction device 15 in the second embodiment is similar to the processing described with reference to the flowchart of Fig. 18 in the first embodiment, the description thereof will be omitted.
However, in the reproduction processing of the second embodiment, instead of executing the mapping processing of the mapping f" using the vector $q_1$ of the equation (3) in step S40, the mapping processing is executed of the mapping g using the vector $q_2$ of the equation (4).
Note that, since the vector $q_2$ of the equation (4) adopted in the second embodiment is not a simple addition of fixed vectors, it is not possible to apply the reproduction processing by viewpoint movement described as a modification in the first embodiment.

<4. Relationship between eccentricity ratio k and resolution improvement ratio>

A relationship between the eccentricity ratio k and the resolution improvement ratio will be described of each of the first and second embodiments.

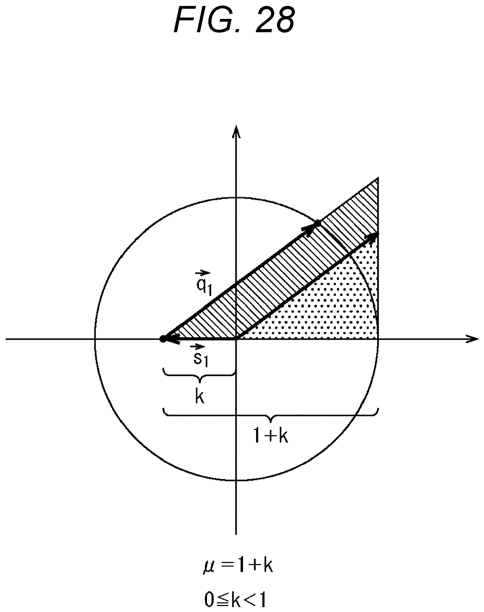

Fig. 28 is a diagram illustrating the relationship between the eccentricity ratio k and the resolution improvement ratio in the first embodiment.
In the first embodiment, a point having the highest resolution is a point farthest from the spherical surface in the opposite direction to the vector $s_1$, and the distance is (1 + k), so that when the resolution improvement ratio is $\mu$, the resolution improvement ratio p becomes $\mu = (1 + k)$ from the similarity relation of triangles. Since a possible value of the eccentricity ratio k is $0 \leqq k < 1$, a possible value of the resolution improvement ratio $\mu$ is $1 \leqq k < 2$.

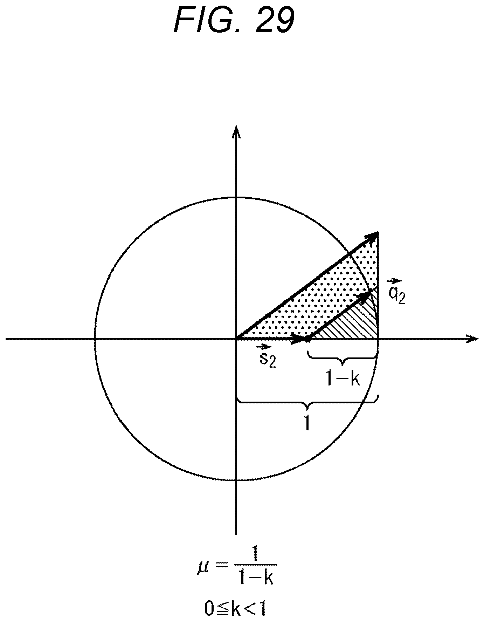

Fig. 29 is a diagram illustrating a relationship between the eccentricity ratio k and the resolution improvement ratio in the second embodiment.
In the second embodiment, a point having the highest resolution is a point closest to the spherical surface in the same direction as the vector $s_2$, and the distance is (1 - k), so that when the resolution improvement ratio is $\mu$, the resolution improvement ratio p is expressed by an equation (10). Since a possible value of the eccentricity ratio k is $0 \leqq k < 1$, the resolution improvement ratio p can take from 1 to infinity.
[Expression 10]

$$\mu = \frac{1}{1-k} \qquad \cdots \ (10)$$

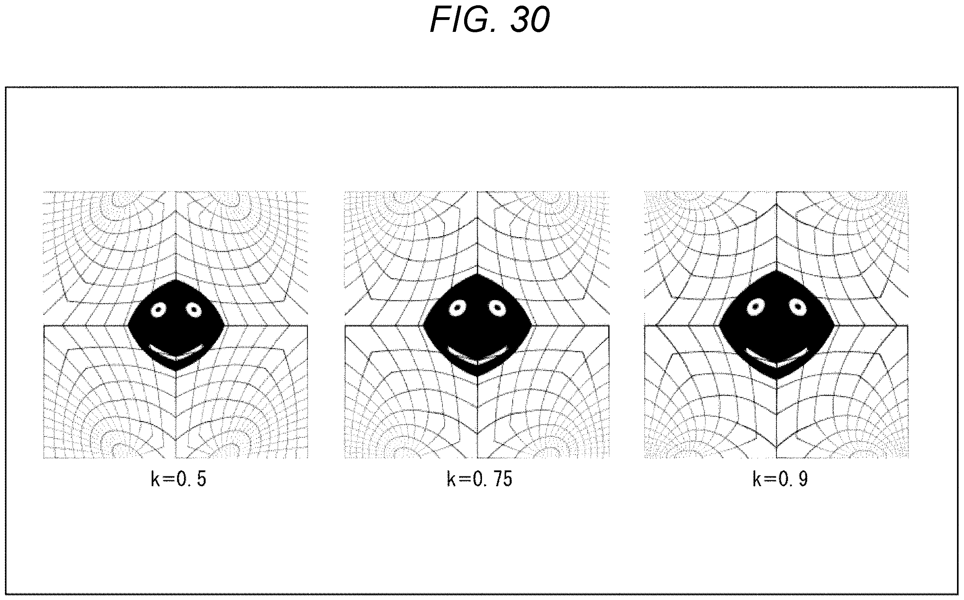

Fig. 30 illustrates an example of the two-dimensional texture image when the eccentricity ratio k in the first embodiment is k = 0.5, 0.75, and 0.9.

In accordance with a change of the eccentricity ratio k from k = 0.5 to 0.9, the resolution is increased but not more than twice.

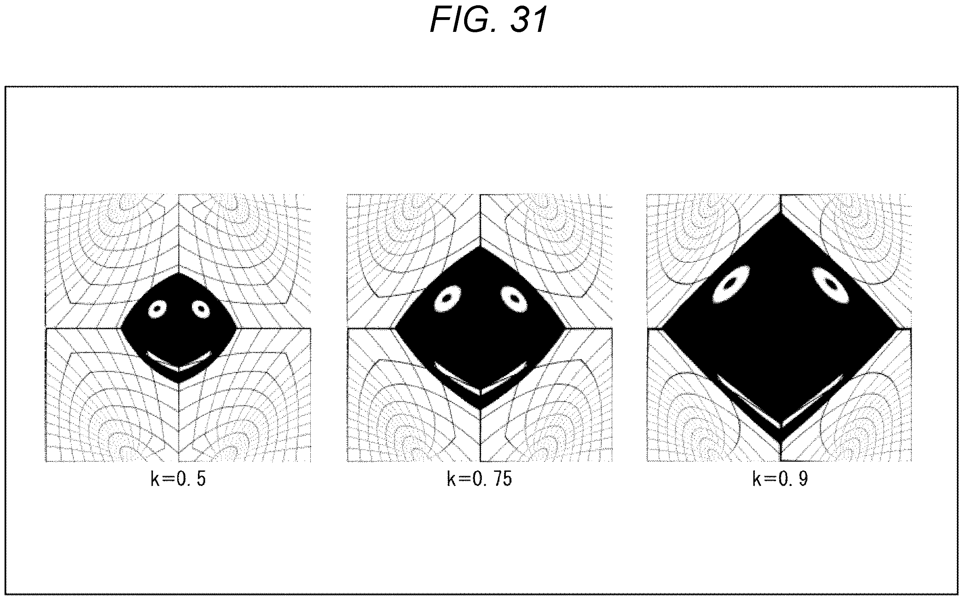

Fig. 31 illustrates an example of the two-dimensional texture image when the eccentricity ratio k in the second embodiment is k = 0.5, 0.75, and 0.9.

In accordance with a change of the eccentricity ratio k from k = 0.5 to 0.9, the resolution becomes extremely large.

<5. Difference between first embodiment and second embodiment>

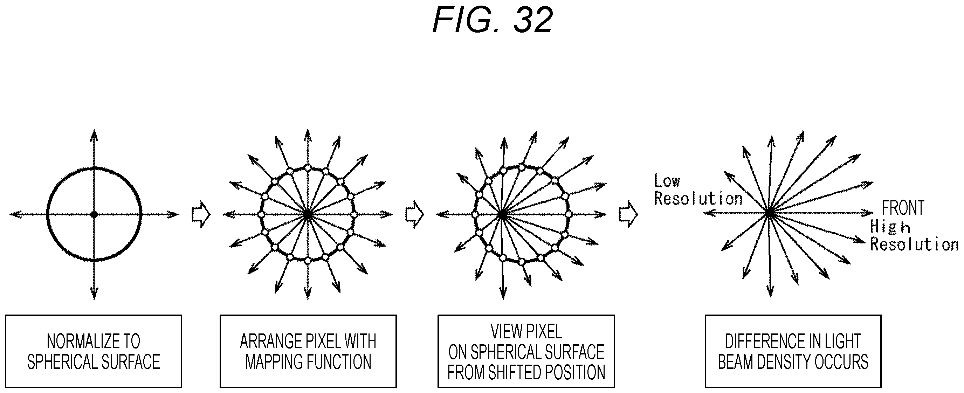

A difference between the mapping processing of the first embodiment and the second embodiment will be described with reference to Figs. 32 to 34.

Fig. 32 is a conceptual diagram of the mapping processing in the first embodiment.

The mapping processing unit 23 performs mapping correction of adding the offset position vector $s_1$ after normalizing a vector generated by the omnidirectional mapping coordinate generation unit 41 so that the vector is arranged on the spherical surface of the unit sphere. Reproduction becomes possible by operation of viewing the 3D model of the unit sphere to which a two-dimensional texture image is pasted from a viewpoint shifted by the offset position vector $s_1$. The density becomes the highest in the right direction that is the front, and the density is the lowest in the left direction.

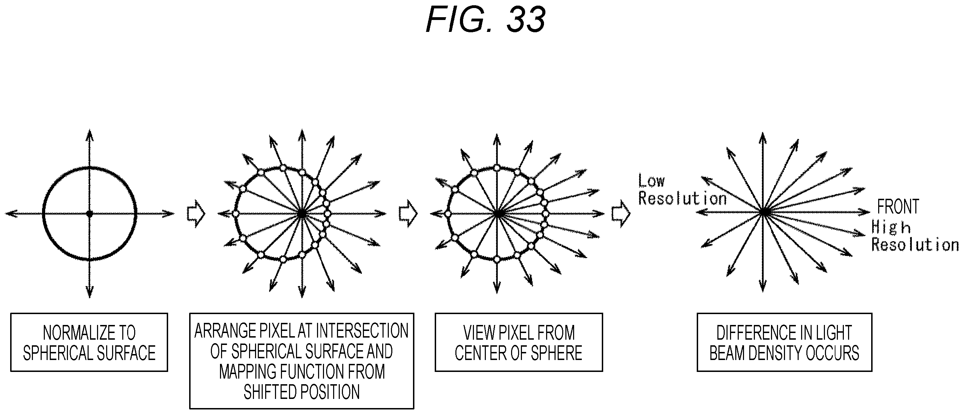

Fig. 33 is a conceptual diagram of the mapping processing in the second embodiment.

The mapping processing unit 23 performs mapping correction by calculation of setting, as new mapping coordinates, a position where the spherical surface intersects with an extension straight line of the vector generated by the omnidirectional mapping coordinate generation unit 41 from a position shifted by the offset position vector $s_2$ from the center of the unit sphere. Reproduction becomes possible by operation of viewing the 3D model of the unit sphere to which the two-dimensional texture image is pasted from the center of the unit sphere. The density becomes the highest in the right direction that is the front, and the density is the lowest in the left direction.

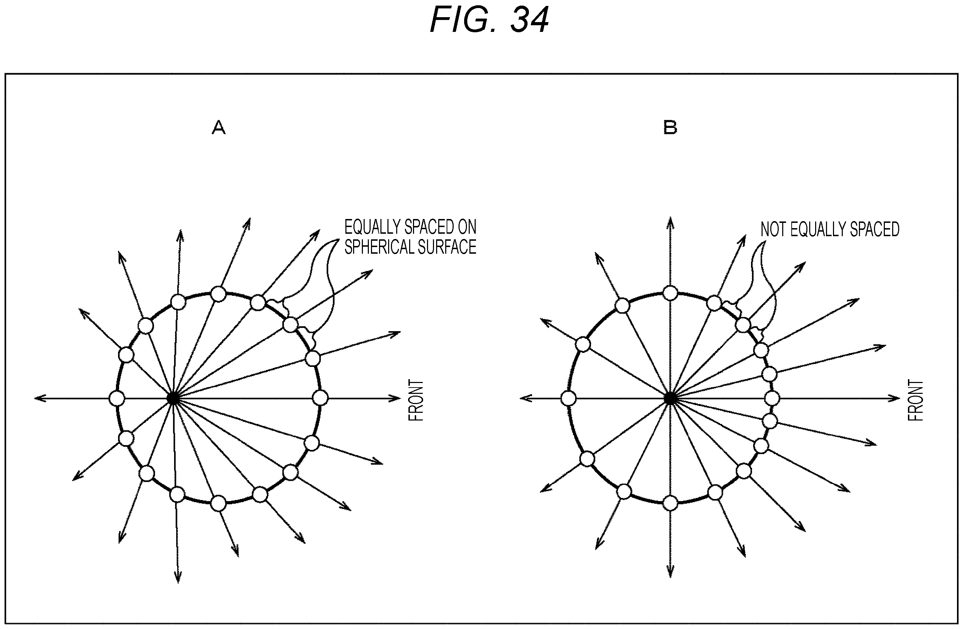

In the mapping processing in the first embodiment, as illustrated in A of Fig. 34, pixel positions (mapping positions) on the spherical surface do not change, and a viewing position changes, with or without the mapping correction. The pixel positions on the spherical surface are equally spaced. The density becomes the highest in the right direction that is the front, and the density is the lowest in the left direction.

On the other hand, in the mapping processing in the second embodiment, as illustrated in B of Fig. 34, the viewing position does not change, and the pixel positions (mapping positions) on the spherical surface change, with or without the mapping correction. The pixel positions on the spherical surface are not equally spaced. The density becomes the highest in the right direction that is the front, and the density is the lowest in the left direction.

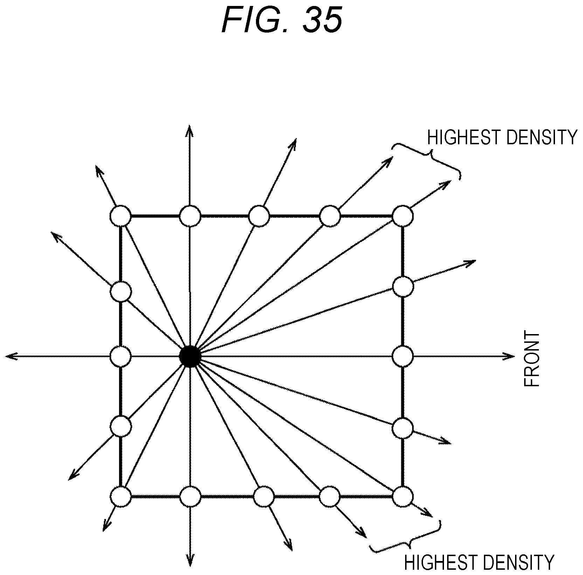

Fig. 35 illustrates an example in which a cube model, not the unit sphere, is adopted as the 3D model, and the resolution is changed depending on the direction, by operation of viewing the 3D model of the cube to which a two-dimensional texture image is pasted from a viewpoint shifted by the offset position vector $s_1$, similarly to the present technology.

In a case where the cube model is adopted as the 3D model, as illustrated in Fig. 35, the front direction does not become a direction in which the pixel density is the highest, due to distortion of the cube model itself. On the other hand, according to the distribution system 10, the front direction can always be the direction in which the pixel density is the highest, by mapping onto the 3D model of the unit sphere.

<6. Combination of first embodiment and second embodiment>

The mapping processing of the first embodiment and the second embodiment may be executed independently as described above, or both types of the mapping processing may be combined and executed. A configuration of executing the mapping processing of both the first embodiment and the second embodiment will be referred to as a third embodiment.

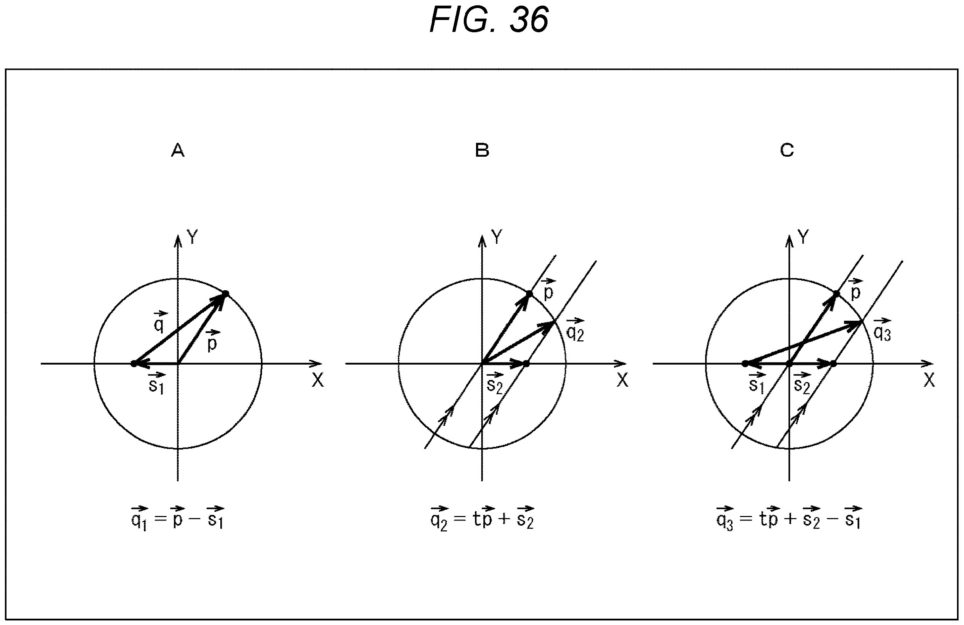

A of Fig. 36 illustrates the vector $q_1$ corresponding to the mapping f'' in the first embodiment, similar to C of Fig. 7.

B of Fig. 36 illustrates the vector $q_2$ corresponding to the mapping g in the second embodiment, similar to C of Fig. 26.

C of Fig. 36 illustrates a vector $q_3$ corresponding to a mapping h in the third embodiment.

The vector $q_3$ is expressed by an equation (11) in which the vector p of the equation (3) in the first embodiment is replaced with the vector $q_2$ of the equation (4) in the second embodiment.

[Expression 11]

$$\vec{q_3} = \vec{q_2} - \vec{s_1} \qquad \cdots (11)$$

Since the vector $q_2$ of the equation (4) is normalized as indicated by the equation (5), it is not necessary to perform normalization processing corresponding to the equation (2).

When the vector $q_2$ of the equation (11) is expanded by using the equation (4), an equation (12) is obtained.

[Expression 12]

$$\vec{q_3} = t\vec{p} + \vec{s_2} - \vec{s_1} \qquad \cdots (12)$$

In the equation (12), t is the same value as t in the equation (4), and is obtained from the quadratic equation of an equation (9). If t is determined, the vector $q_3$ is obtained by the equation (12), so that mapping processing can be executed of the mapping h using the vector $q_3$.

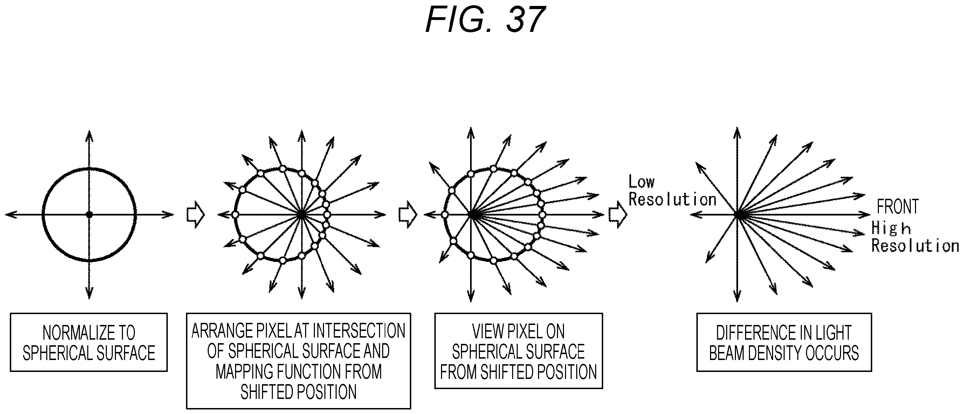

Fig. 37 is a conceptual diagram of the mapping processing in the third embodiment.

Similarly to the second embodiment, the mapping processing unit 23 performs mapping correction by calculation of setting, as new mapping coordinates, a position where the spherical surface intersects with an extension straight line of the vector generated by the omnidirectional mapping coordinate generation unit 41 from a position shifted by the offset position vector $s_2$ from the center of the unit sphere. Then, reproduction becomes possible by operation of viewing the 3D model of the unit sphere to which a two-dimensional texture image is pasted from a viewpoint shifted by the offset position vector $s_1$, similarly to the first embodiment.

<7. Conclusion>

According to the distribution system 10 of the present disclosure, an image of one encoded stream generated by the generation device 12 and transmitted from the distribution server 13 is an omnidirectional image corresponding to looking around 360 degrees in all directions of top, bottom, left, and right, and an image in which high resolution is set in a direction (front direction) corresponding to the gaze direction of the viewer. As a result, it is possible to present the viewer with an image in which the image quality in the front direction is improved, while securing an image that can be drawn at the periphery of the visual field or at the time of sudden turning around. Compared to a distribution system that distributes an omnidirectional image in which resolution (pixel density) is uniform in all directions, it is possible to present the viewer with an image having a high image quality in the viewing direction side on the same band.

In the generation device 12 that generates the omnidirectional image in which high resolution is set in the predetermined direction corresponding to the front direction, in addition to the omnidirectional mapping coordinate generation unit 41 that distributes the omnidirectional image in which resolution is uniform in all directions, the vector normalization unit 42 and the mapping correction unit 43 are newly provided.

The vector normalization unit 42 converts (normalizes) the vector d corresponding to the predetermined 3D model (the regular octahedron model in the present embodiment) adopted by the omnidirectional mapping coordinate generation unit 41 into the vector p of the 3D model of the unit sphere.

The mapping correction unit 43 performs correction of the 3D model of the unit sphere by calculation of adding a predetermined offset position vector s to the vector p normalized by the vector normalization unit 42.

Some general omnidirectional mapping is defined by a 3D model in which a distance from the center is not constant like cube mapping, and it has been difficult to perform constant resolution correction without depending on the shape of the 3D model.

In the generation device 12, the predetermined 3D model adopted by the omnidirectional mapping coordinate generation unit 41 is temporarily converted into the 3D model of the unit sphere by the vector normalization unit 42, so that arbitrary 3D model can be used for the omnidirectional mapping. In other words, an omnidirectional image can be generated in which high resolution is set in a specific direction, for any kind of omnidirectional mapping. Furthermore, since the processing is always performed on the same unit sphere, the effect becomes constant of the correction by the mapping correction unit 43.

Thus, according to the distribution system 10, it is enabled to provide a mapping that is applicable to an arbitrary mapping method and in which high resolution is set in a viewing direction.

With the eccentricity ratio k corresponding to the length of the offset position vector s added by the mapping correction unit 43, the resolution improvement ratio in the front direction can be set steplessly, and setting can be freely made depending on a reproduction side device, an imaging condition, and the like.

Furthermore, when the eccentricity ratio k is set to a predetermined value (0), the system is in a state where the correction processing is not performed, in other words, is the same as a system that distributes an omnidirectional image in which resolution is uniform in all directions, and it is possible to have compatibility with a distribution system that distributes an omnidirectional image in which resolution is uniform in all directions.

Also in the reproduction device 15, the mapping processing unit 123 is included having the configuration similar to the mapping processing unit 23 of the generation device 12, so that effects are obtained similar to those described above.

In the first embodiment, from the characteristic that the equation for obtaining the mapping-corrected vector $q_1$ is represented by simple vector addition to the vector p, when switching of the encoded stream corresponding to the front direction occurs, it is also possible to cope with only by the processing in the reproduction device 15 that performs processing of moving by the amount of offset corresponding to the eccentricity ratio k.

In the second embodiment, the resolution improvement ratio $\mu$ in the high resolution direction can be set up to infinity.

<8. Modifications>

A modification will be described that can be commonly applied to the above-described first to third embodiments.

(Another first example of encoded stream)

In the first to third embodiments described above, a case has been described where the number of encoded streams stored in the distribution server 13 is six; however, the number of encoded streams is not limited to six. More than six, for example, 12 or 24, encoded streams corresponding to high resolution directions may be uploaded to the distribution server 13, and the encoded streams may be switched more finely in the gaze direction of the viewer.

Conversely, a configuration may also be adopted in which less than six encoded streams corresponding to the high resolution directions are uploaded to the distribution server 13.

For example, in a case where the omnidirectional image is an omnidirectional image generated from captured images in which a concert hall is imaged, a configuration can be made in which three encoded streams are prepared in the distribution server 13, the encoded streams having high resolution directions only in a stage direction and its vicinity assumed to be important for the viewer, and in a case where another direction (for example, an opposite direction to the stage direction) is the gaze direction of the viewer, one encoded stream is selected having uniform pixel density in all directions.

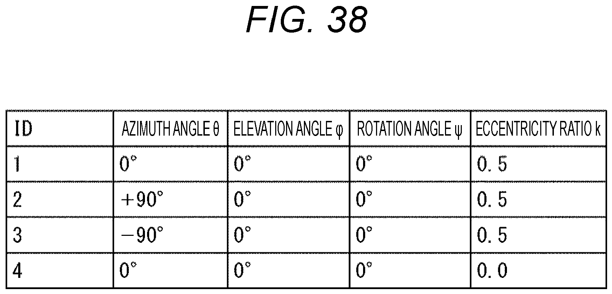

In this case, the table generation unit 26 generates the parameter table illustrated in Fig. 38 as the auxiliary information.

The three encoded streams corresponding to ID 1 to ID 3 are encoded streams in which predetermined directions are set as high resolution directions, and the one encoded stream corresponding to ID4 is an encoded stream of an omnidirectional image having uniform pixel density in all directions, which is selected when the gaze direction of the viewer is other than directions corresponding to the encoded streams of ID 1 to ID3.

(Another second example of encoded stream)

In the first to third embodiments described above, an example has been described in which only one type is stored of the eccentricity ratio k of 0.5 of the encoded stream stored in the distribution server 13; however, a plurality of encoded streams may be stored for each of a plurality of types of eccentricity ratio k. For example, the above-described six encoded streams may be generated and stored for three types of eccentricity ratios k of k = 0.2, 0.5, and 0.7. In this case, for example, the reproduction device 15 can select an encoded stream with an appropriate eccentricity ratio k depending on the viewing angle of the head mounted display 16 and request the distribution server 13 to transmit the encoded stream.

(Another third example of encoded stream)

In the embodiments described above, the omnidirectional image transmitted as an encoded stream is an omnidirectional image for a 2D image that displays the same images for right and left eyes of the viewer; however, the omnidirectional image may be an omnidirectional image for a 3D image in which an omnidirectional image for the left eye and an omnidirectional image for the right eye are combined (packed) .

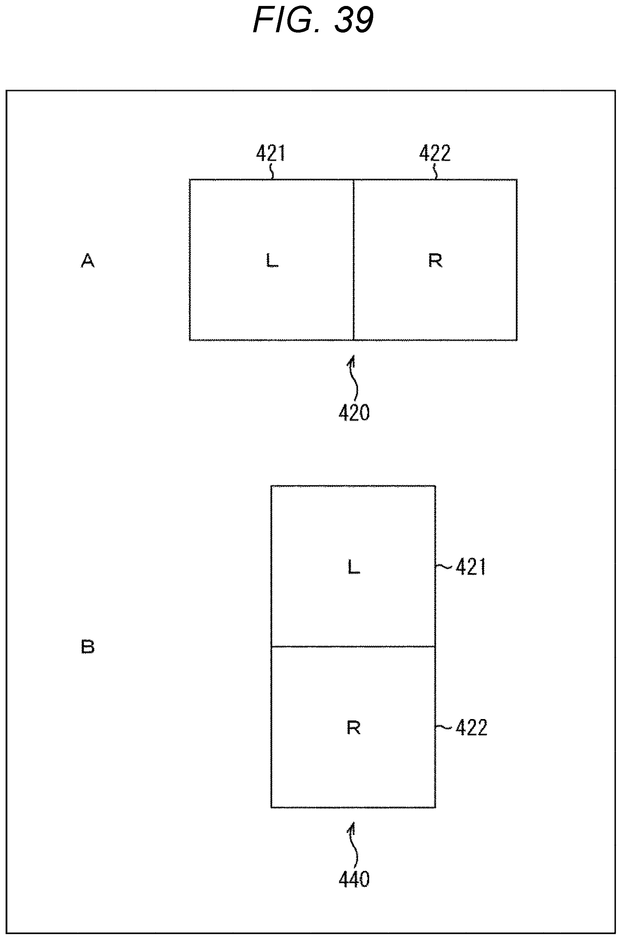

Specifically, as illustrated in A of Fig. 39, the omnidirectional image may be, for example, a packing image 420 in which an omnidirectional image 421 for the left eye and an omnidirectional image 422 for the right eye are packed in the lateral direction (horizontal direction).

Furthermore, as illustrated in B of Fig. 39, the omnidirectional image may be, for example, a packing image 440 in which the omnidirectional image 421 for the left eye and the omnidirectional image 422 for the right eye are packed in the longitudinal direction (vertical direction).

The omnidirectional image 421 for the left eye is an image obtained by perspectively projecting an omnidirectional image of a viewpoint for the left eye mapped onto a sphere, with the center of the sphere as a focal point, onto a visual field range of the left eye. Furthermore, the omnidirectional image 422 for the right eye is an image obtained by perspectively projecting an omnidirectional image of a viewpoint for the right eye mapped onto a sphere, with the center of the sphere as a focal point, onto a visual field range of the right eye.

In a case where the omnidirectional image is a packing image, the mapping processing unit 123 of Fig. 16 separates the packing image obtained as a result of decoding by the decoder 122 into an omnidirectional image for the left eye and an omnidirectional image for the right eye. Then, the mapping processing unit 123 generates a 3D model image for each of the viewpoint for the left eye and the viewpoint for the right eye, and the drawing unit 128 generates a display image by using the 3D model image for each of the viewpoint for the left eye and the viewpoint for the right eye.

As a result, in a case where 3D display is possible, the head mounted display 16 can perform 3D display of the display image by displaying display images of the viewpoint for the left eye and the viewpoint for the right eye respectively as an image for the left eye and an image for the right eye.

(Example of live distribution)

In each of the above-described embodiments, the plurality of encoded streams and auxiliary information generated by the generation device 12 are stored once in the storage 102 of the distribution server 13, and in response to a request from the reproduction device 15, the distribution server 13 transmits the encoded stream and the auxiliary information to the reproduction device 15.

However, one or more encoded streams and auxiliary information generated by the generation device 12 may be distributed in real time (live distribution) without being stored in the storage 102 of the distribution server 13. In this case, the data received by the reception unit 101 of the distribution server 13 is immediately transmitted from the transmission/reception unit 103 to the reproduction device 15.

(Others)

Moreover, in the embodiments described above, the captured image is a moving image, but the captured image may be a still image. Furthermore, in the embodiments described above, an example has been described of using an omnidirectional image; however, the technology according to the present disclosure can be applied to all 360-degree images in which 360 degrees (all directions) are imaged, including an all-sky image, an omni-azimuth image, a 360-degree panoramic image, and the like, in addition to the omnidirectional image.

The distribution system 10 may include a stationary display instead of the head mounted display 16. In this case, the reproduction device 15 does not include the camera 15A, and the viewing position and the gaze direction are input by the viewer operating a controller connected to the reproduction device 15 or the stationary display.

Furthermore, the distribution system 10 may include a mobile terminal instead of the reproduction device 15 and the head mounted display 16. In this case, the mobile terminal performs processing of the reproduction device 15 other than the camera 15A, and displays the display image on the display of the mobile terminal. The viewer inputs the viewing position and the gaze direction by changing the posture of the mobile terminal, and the mobile terminal acquires the input viewing position and gaze direction by causing the built-in gyro sensor to detect the posture of the mobile terminal.

<9. Computer configuration example>

A series of processing steps described above can be executed by hardware, or can be executed by software. In a case where the series of processing steps is executed by software, a program constituting the software is installed in a computer. Here, the computer includes a computer incorporated in dedicated hardware, and a computer capable of executing various functions by installation of various programs, for example, a general purpose personal computer, and the like.

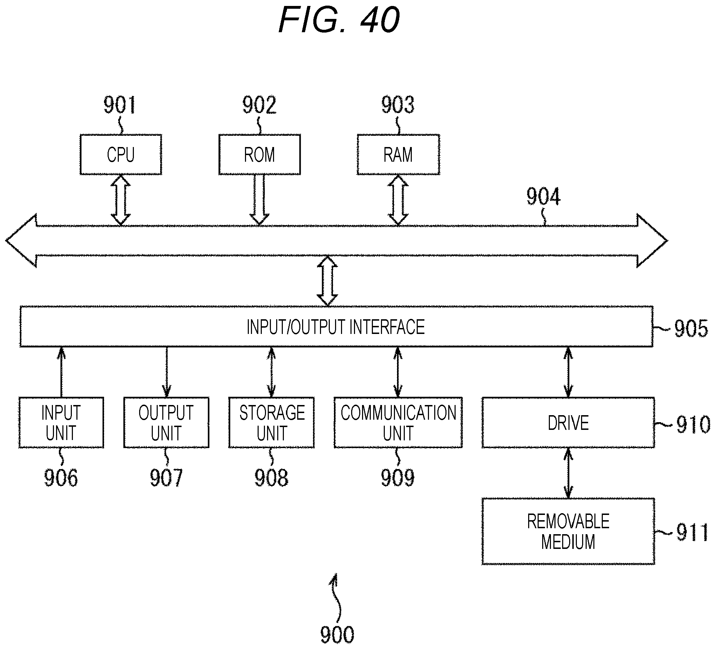

Fig. 40 is a block diagram illustrating a configuration example of hardware of the computer that executes the above-described series of processing steps by the program.

In a computer 900, a central processing unit (CPU) 901, a read only memory (ROM) 902, and a random access memory (RAM) 903 are connected to each other by a bus 904.

Moreover, an input/output interface 905 is connected to the bus 904. The input/output interface 905 is connected to an input unit 906, an output unit 907, a storage unit 908, a communication unit 909, and a drive 910.

The input unit 906 includes a keyboard, a mouse, a microphone, and the like. The output unit 907 includes a display, a speaker, and the like. The storage unit 908 includes a hard disk, a nonvolatile memory, or the like. The communication unit 909 includes a network interface and the like. The drive 910 drives a removable medium 911 such as a magnetic disk, an optical disk, a magneto-optical disk, or a semiconductor memory.

In the computer 900 configured as described above, for example, the CPU 901 loads the program stored in the storage unit 908 to the RAM 903 via the input/output interface 905 and the bus 904 to execute the above-described series of processing steps.

The program executed by the computer 900 (CPU 901) can be provided, for example, by being recorded in the removable medium 911 as a package medium or the like. Furthermore, the program can be provided via a wired or wireless transmission medium such as a local area network, the Internet, or digital satellite broadcasting.

In the computer 900, the program can be installed to the storage unit 908 via the input/output interface 905 by mounting the removable medium 911 to the drive 910. Furthermore, the program can be installed to the storage unit 908 by receiving with the communication unit 909 via the wired or wireless transmission medium. Besides, the program can be installed in advance to the ROM 902 and the storage unit 908.

Note that, the program executed by the computer 900 can be a program by which the processing is performed in time series along the order described herein, and can be a program by which the processing is performed in parallel or at necessary timing such as when a call is performed.

<10. Application example>

The technology according to the present disclosure can be applied to various products. The technology according to the present disclosure may be implemented as a device mounted on any type of mobile body, for example, a car, an electric car, a hybrid electric car, a motorcycle, a bicycle, a personal mobility, an airplane, a drone, a ship, a robot, a construction machine, an agricultural machine (tractor), and the like.

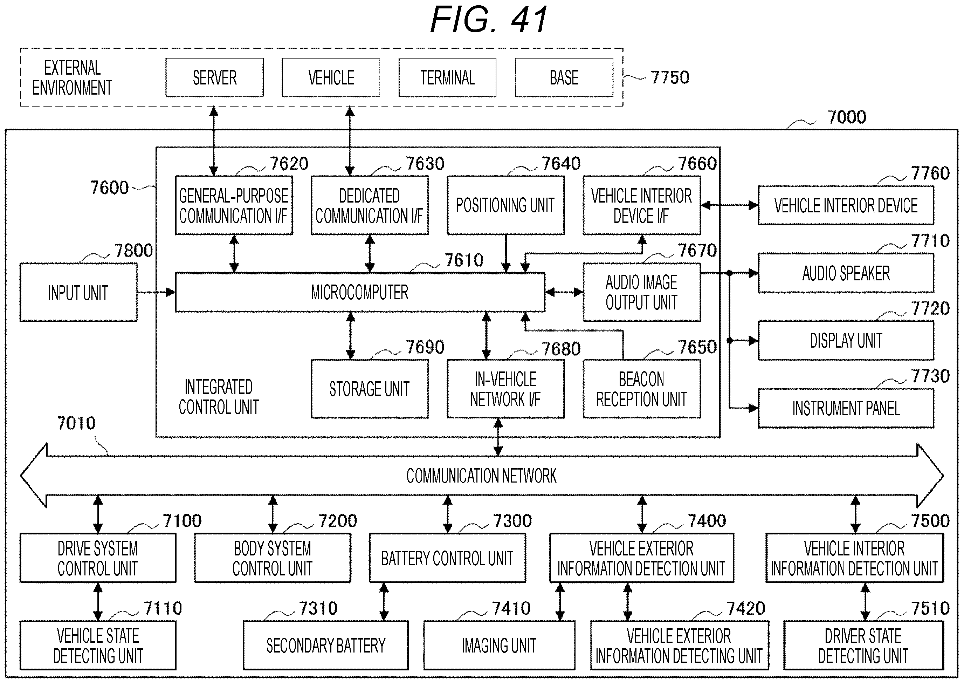

Fig. 41 is a block diagram illustrating a schematic configuration example of a vehicle control system 7000 that is an example of a mobile body control system to which the technology according to the present disclosure can be applied. The vehicle control system 7000 includes a plurality of electronic control units connected to each other via a communication network 7010. In the example illustrated in Fig. 41, the vehicle control system 7000 includes a drive system control unit 7100, a body system control unit 7200, a battery control unit 7300, a vehicle exterior information detection unit 7400, a vehicle interior information detection unit 7500, and an integrated control unit 7600. The communication network 7010 connecting these plural control units to each other may be, for example, an in-vehicle communication network conforming to an arbitrary standard such as Controller Area Network (CAN), Local Interconnect Network (LIN), Local Area Network (LAN), or FlexRay (registered trademark).

Each control unit includes a microcomputer that performs arithmetic processing in accordance with various programs, a storage unit that stores programs executed by the microcomputer, parameters used for various calculations, or the like, and a drive circuit that drives devices to be controlled. Each control unit includes a network I/F for communicating with other control units via the communication network 7010, and a communication I/F for communicating with devices inside and outside a vehicle, a sensor, or the like by wired communication or wireless communication. Fig. 41 illustrates, as a functional configuration of the integrated control unit 7600, a microcomputer 7610, a general-purpose communication I/F 7620, a dedicated communication I/F 7630, a positioning unit 7640, a beacon reception unit 7650, a vehicle interior device I/F 7660, an audio image output unit 7670, an in-vehicle network I/F 7680, and a storage unit 7690. Similarly, the other control units each include a microcomputer, a communication I/F, a storage unit, and the like.

The drive system control unit 7100 controls operation of devices related to a drive system of a vehicle in accordance with various programs. For example, the drive system control unit 7100 functions as a control device of a driving force generating device for generating driving force of the vehicle, such as an internal combustion engine or a driving motor, a driving force transmitting mechanism for transmitting driving force to wheels, a steering mechanism for adjusting a steering angle of the vehicle, a braking device for generating braking force of the vehicle, and the like. The drive system control unit 7100 may include a function as a control device, such as Antilock Brake System (ABS) or Electronic Stability Control (ESC).

The drive system control unit 7100 is connected to a vehicle state detecting unit 7110. The vehicle state detecting unit 7110 includes, for example, at least one of a gyro sensor that detects angular velocity of axis rotational motion of a vehicle body, an acceleration sensor that detects acceleration of the vehicle, or a sensor for detecting an operation amount of the accelerator pedal, an operation amount of the brake pedal, a steering angle of the steering wheel, engine speed or wheel rotation speed, or the like. The drive system control unit 7100 performs arithmetic processing using a signal input from the vehicle state detecting unit 7110, and controls the internal combustion engine, the driving motor, the electric power steering device, the brake device, or the like.

The body system control unit 7200 controls operation of various devices equipped on the vehicle body in accordance with various programs. For example, the body system control unit 7200 functions as a control device of a keyless entry system, a smart key system, a power window device, or various lamps such as a head lamp, a back lamp, a brake lamp, a turn signal lamp, and a fog lamp. In this case, to the body system control unit 7200, a radio wave transmitted from a portable device that substitutes for a key, or signals of various switches can be input. The body system control unit 7200 accepts input of these radio waves or signals and controls the door lock device, power window device, lamp, and the like of the vehicle.

The battery control unit 7300 controls a secondary battery 7310 that is a power supply source of the driving motor in accordance with various programs. For example, information such as a battery temperature, a battery output voltage, or a battery remaining capacity is input from a battery device including the secondary battery 7310 to the battery control unit 7300. The battery control unit 7300 performs arithmetic processing using these signals, and performs temperature adjustment control of the secondary battery 7310 or control of a cooling device or the like provided in the battery device.

The vehicle exterior information detection unit 7400 detects information regarding the outside of the vehicle on which the vehicle control system 7000 is mounted. For example, at least one of an imaging unit 7410 or a vehicle exterior information detecting unit 7420 is connected to the vehicle exterior information detection unit 7400. The imaging unit 7410 includes at least one of a Time Of Flight (ToF) camera, a stereo camera, a monocular camera, an infrared camera, or other cameras. To the vehicle exterior information detecting unit 7420, for example, at least one of an environmental sensor for detecting the current climate or weather, or a peripheral information detection sensor for detecting another vehicle, an obstacle, a pedestrian, or the like around the vehicle on which the vehicle control system 7000 is mounted.

The environmental sensor may be, for example, at least one of a raindrop sensor that detects rainy weather, a fog sensor that detects fog, a sunshine sensor that detects sunshine degree, or a snow sensor that detects snowfall. The peripheral information detection sensor may be at least one of an ultrasonic sensor, a radar device, or a Light Detection and Ranging (LIDAR) device (Laser Imaging Detection and Ranging (LIDAR) device). The imaging unit 7410 and the vehicle exterior information detecting unit 7420 may be provided as independent sensors or devices, respectively, or may be provided as a device in which a plurality of sensors or devices is integrated together.

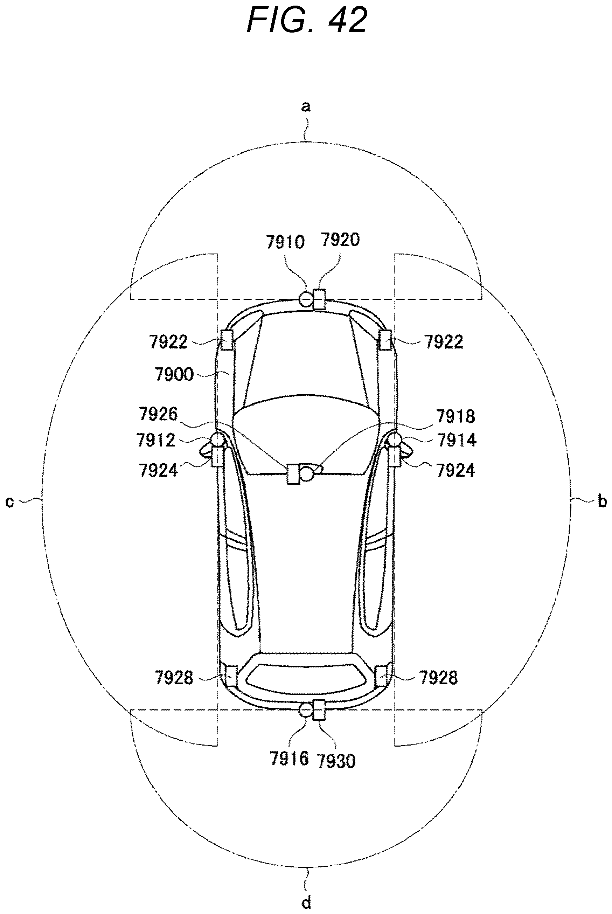

Here, Fig. 42 illustrates an example of installation positions of the imaging unit 7410 and the vehicle exterior information detecting unit 7420. Imaging units 7910, 7912, 7914, 7916, and 7918 are provided at, for example, at least one position of the front nose, the side mirror, the rear bumper, the back door, the upper part of the windshield in the vehicle interior, of a vehicle 7900. The imaging unit 7910 provided at the front nose and the imaging unit 7918 provided at the upper part of the windshield in the vehicle interior mainly acquire images ahead of the vehicle 7900. The imaging units 7912 and 7914 provided at the side mirrors mainly acquire images on the sides of the vehicle 7900. The imaging unit 7916 provided at the rear bumper or the back door mainly acquires an image behind the vehicle 7900. The imaging unit 7918 provided on the upper part of the windshield in the vehicle interior is mainly used for detecting a preceding vehicle, a pedestrian, an obstacle, a traffic signal, a traffic sign, a lane, or the like.

Note that, Fig. 42 illustrates an example of imaging ranges of the imaging units 7910, 7912, 7914, and 7916. An imaging range a indicates an imaging range of the imaging unit 7910 provided at the front nose, imaging ranges b and c respectively indicate imaging ranges of the imaging units 7912 and 7914 provided at the side mirrors, an imaging range d indicates an imaging range of the imaging unit 7916 provided at the rear bumper or the back door. For example, image data captured by the imaging units 7910, 7912, 7914, and 7916 are superimposed on each other, whereby an overhead image is obtained of the vehicle 7900 viewed from above.

Vehicle exterior information detecting units 7920, 7922, 7924, 7926, 7928, and 7930 provided on the front, rear, side, corner, upper part of the windshield in the vehicle interior of the vehicle 7900 may be ultrasonic sensors or radar devices, for example. The vehicle exterior information detecting units 7920, 7926, and 7930 provided on the front nose, rear bumper, back door, and upper part of the windshield in the vehicle interior of the vehicle 7900 may be LIDAR devices, for example. These vehicle exterior information detecting units 7920 to 7930 are mainly used for detecting a preceding vehicle, a pedestrian, an obstacle, or the like.

Referring back to Fig. 41, the description will be continued. The vehicle exterior information detection unit 7400 causes the imaging unit 7410 to capture an image outside the vehicle and receives the image data captured. Furthermore, the vehicle exterior information detection unit 7400 receives detected information from the connected vehicle exterior information detecting unit 7420. In a case where the vehicle exterior information detecting unit 7420 is an ultrasonic sensor, a radar device, or a LIDAR device, the vehicle exterior information detection unit 7400 transmits ultrasonic waves, electromagnetic waves, or the like, and receives information regarding received reflected waves. The vehicle exterior information detection unit 7400 may perform object detection processing or distance detection processing on a person, a car, an obstacle, a sign, a character on a road surface, or the like, on the basis of the received information. The vehicle exterior information detection unit 7400 may perform environment recognition processing for recognizing rainfall, fog, road surface condition, or the like on the basis of the received information. The vehicle exterior information detection unit 7400 may calculate a distance to an object outside the vehicle on the basis of the received information.

Furthermore, the vehicle exterior information detection unit 7400 may perform distance detection processing or image recognition processing for recognizing a person, a car, an obstacle, a sign, a character on a road surface, or the like, on the basis of the received image data. The vehicle exterior information detection unit 7400 may perform processing such as distortion correction or alignment on the received image data, and synthesize the image data captured by different imaging units 7410 to generate an overhead image or a panoramic image. The vehicle exterior information detection unit 7400 may perform viewpoint conversion processing using the image data captured by different imaging units 7410.

The vehicle interior information detection unit 7500 detects information regarding the inside of the vehicle. The vehicle interior information detection unit 7500 is connected to, for example, a driver state detecting unit 7510 that detects a state of a driver. The driver state detecting unit 7510 may include a camera that captures an image of the driver, a biometric sensor that detects biological information of the driver, a microphone that collects sound in the vehicle interior, and the like. The biometric sensor is provided, for example, on a seat surface, a steering wheel, or the like, and detects biological information of an occupant sitting on a seat or a driver holding the steering wheel. The vehicle interior information detection unit 7500 may calculate a degree of fatigue or a degree of concentration of the driver on the basis of detected information input from the driver state detecting unit 7510, and may determine whether or not the driver is dozing. The vehicle interior information detection unit 7500 may perform noise canceling processing or the like on a collected sound signal.

The integrated control unit 7600 controls overall operation in the vehicle control system 7000 in accordance with various programs. The integrated control unit 7600 is connected to an input unit 7800. The input unit 7800 is implemented by a device, for example, a touch panel, a button, a microphone, a switch, a lever, or the like to which input operation by the occupant can be performed. Data obtained by performing voice recognition on the sound input by the microphone may be input to the integrated control unit 7600. The input unit 7800 may be, for example, a remote control device using infrared rays or other radio waves, or an external connection device such as a mobile phone or a personal digital assistant (PDA) adaptable to the operation of the vehicle control system 7000. The input unit 7800 may be a camera, for example, and in that case, the occupant can input information by gesture. Alternatively, data may be input obtained by detecting movement of a wearable device worn by the occupant. Moreover, the input unit 7800 may include, for example, an input control circuit or the like that generates an input signal on the basis of information input by the occupant or the like using the input unit 7800, and outputs the input signal to the integrated control unit 7600. By operating the input unit 7800, the occupant or the like inputs various data to the vehicle control system 7000 or gives an instruction to perform processing operation.

The storage unit 7690 may include Read Only Memory (ROM) that stores various programs executed by the microcomputer, and Random Access Memory (RAM) that stores various parameters, calculation results, sensor values, or the like. Furthermore, the storage unit 7690 may be implemented by a magnetic storage device such as a hard disc drive (HDD), a semiconductor storage device, an optical storage device, a magneto-optical storage device, or the like.

The general-purpose communication I/F 7620 is a general-purpose communication I/F that mediates communication with various devices existing in an external environment 7750. The general-purpose communication I/F 7620 may implement a cellular communication protocol such as Global System of Mobile communications (GSM) (registered trademark), WiMAX (registered trademark), Long Term Evolution (LTE) (registered trademark), or LTE-Advanced (LTE-A), or other wireless communication protocols such as a wireless LAN (also referred to as Wi-Fi (registered trademark)), and Bluetooth (registered trademark). For example, the general-purpose communication I/F 7620 may connect to a device (for example, an application server or a control server) existing on an external network (for example, the Internet, a cloud network, or a company specific network) via a base station or an access point. Furthermore, the general-purpose communication I/F 7620 may connect to a terminal existing in the vicinity of the vehicle (for example, a terminal of a driver, a pedestrian, or a shop, or a Machine Type Communication (MTC) terminal) by using a Peer To Peer (P2P) technology, for example.

The dedicated communication I/F 7630 is a communication I/F supporting a communication protocol formulated for use in vehicles. For example, the dedicated communication I/F 7630 may implement a standard protocol such as Wireless Access in Vehicle Environment (WAVE) that is a combination of IEEE 802.11p of the lower layer and IEEE 1609 of the upper layer, Dedicated Short Range Communications (DSRC), or a cellular communication protocol. The dedicated communication I/F 7630 typically performs V2X communication that is a concept including one or more of Vehicle to Vehicle communication, Vehicle to Infrastructure communication, Vehicle to Home communication, and Vehicle to Pedestrian communication.

For example, the positioning unit 7640 receives a Global Navigation Satellite System (GNSS) signal (for example, a Global Positioning System (GPS) signal from a GPS satellite) from a GNSS satellite to execute positioning, and generates position information including the latitude, longitude, and altitude of the vehicle. Note that, the positioning unit 7640 may specify the current position by exchanging signals with a wireless access point, or may acquire the position information from a terminal such as a mobile phone, a PHS, or a smartphone having a positioning function.

The beacon reception unit 7650 receives radio waves or electromagnetic waves transmitted from a wireless station or the like installed on a road, for example, and acquires information such as the current position, congestion, road closure, or required time. Note that, the function of the beacon reception unit 7650 may be included in the dedicated communication I/F 7630 described above.

The vehicle interior device I/F 7660 is a communication interface that mediates connection between the microcomputer 7610 and various vehicle interior devices 7760 existing in the vehicle. The vehicle interior device I/F 7660 may establish a wireless connection using a wireless communication protocol such as a wireless LAN, Bluetooth (registered trademark), near field communication (NFC), or Wireless USB (WUSB). Furthermore, the vehicle interior device I/F 7660 may establish a wired connection such as a Universal Serial Bus (USB), High-Definition Multimedia Interface (HDMI) (registered trademark), or Mobile High-definition Link (MHL) via a connection terminal (and a cable if necessary) not illustrated. The vehicle interior device 7760 may include, for example, at least one of a mobile device or a wearable device possessed by the occupant, or an information device carried in or attached to the vehicle. Furthermore, the vehicle interior device 7760 may include a navigation device that performs a route search to an arbitrary destination. The vehicle interior device I/F 7660 exchanges control signals or data signals with these vehicle interior devices 7760.

The in-vehicle network I/F 7680 is an interface that mediates communication between the microcomputer 7610 and the communication network 7010. The in-vehicle network I/F 7680 transmits and receives signals and the like in accordance with a predetermined protocol supported by the communication network 7010.

The microcomputer 7610 of the integrated control unit 7600 controls the vehicle control system 7000 in accordance with various programs on the basis of information acquired via at least one of the general-purpose communication I/F 7620, the dedicated communication I/F 7630, the positioning unit 7640, the beacon reception unit 7650, the vehicle interior device I/F 7660, or the in-vehicle network I/F 7680. For example, the microcomputer 7610 may calculate a control target value of the driving force generating device, the steering mechanism, or the braking device on the basis of acquired information inside and outside the vehicle, and output a control command to the drive system control unit 7100. For example, the microcomputer 7610 may perform cooperative control aiming for implementing functions of advanced driver assistance system (ADAS) including collision avoidance or shock mitigation of the vehicle, follow-up traveling based on an inter-vehicle distance, vehicle speed maintaining traveling, vehicle collision warning, vehicle lane departure warning, or the like. Furthermore, the microcomputer 7610 may perform cooperative control aiming for automatic driving or the like that autonomously travels without depending on operation of the driver, by controlling the driving force generating device, the steering mechanism, the braking device, or the like on the basis of acquired information around the vehicle.

The microcomputer 7610 may generate three-dimensional distance information between the vehicle and an object such as a surrounding structure or a person on the basis of information acquired via at least one of the general-purpose communication I/F 7620, the dedicated communication I/F 7630, the positioning unit 7640, the beacon reception unit 7650, the vehicle interior device I/F 7660, or the in-vehicle network I/F 7680, and create local map information including peripheral information of the current position of the vehicle. Furthermore, on the basis of the acquired information, the microcomputer 7610 may predict danger such as collision of a vehicle, approach of a pedestrian or the like, or entry into a road closed, and generate a warning signal. The warning signal may be, for example, a signal for generating a warning sound or for turning on a warning lamp.

The audio image output unit 7670 transmits an output signal of at least one of the audio or image to an output device capable of visually or aurally notifying an occupant in the vehicle or the outside of the vehicle of information. In the example of Fig. 41, as the output device, an audio speaker 7710, a display unit 7720, and an instrument panel 7730 are illustrated. The display unit 7720 may include, for example, at least one of an on-board display or a head-up display. The display unit 7720 may have an Augmented Reality (AR) display function. The output device may be another device other than these devices, such as a lamp, a projector, or a wearable device such as a headphone and an eyeglass type display worn by the occupant. In a case where the output device is a display device, the display device visually displays results obtained by the various types of processing performed by the microcomputer 7610 or information received from the other control units in various formats such as text, an image, a table, or a graph. Furthermore, in a case where the output device is an audio output device, the audio output device converts an audio signal including reproduced audio data, acoustic data, and the like into an analog signal to aurally output the analog signal.

Note that, in the example illustrated in Fig. 41, at least two control units connected together via the communication network 7010 may be integrated as one control unit. Alternatively, each control unit may be configured by plural control units. Moreover, the vehicle control system 7000 may include another control unit not illustrated. Furthermore, in the above description, some or all of the functions performed by any of the control units may be performed by another control unit. That is, as long as information is transmitted and received via the communication network 7010, predetermined arithmetic processing may be performed by any of the control units. Similarly, a sensor or device connected to any of the control units may be connected to another control unit, and plural control units may mutually transmit and receive detected information via the communication network 7010.

Note that, a computer program for implementing each function of the distribution system 10 described above can be implemented in any of the control units or the like. Furthermore, it is also possible to provide a computer readable recording medium in which such a computer program is stored. The recording medium is, for example, a magnetic disk, an optical disk, a magneto-optical disk, a flash memory, or the like. Furthermore, the above computer program may be distributed via, for example, a network without using a recording medium.

In a case where the distribution system 10 described above is applied to the vehicle control system 7000 described above, for example, the imaging device 11 of the distribution system 10 corresponds to at least a part of the imaging unit 7410. Furthermore, the generation device 12, the distribution server 13, and the reproduction device 15 are integrated together, and correspond to the microcomputer 7610 and the storage unit 7690. The head mounted display 16 corresponds to the display unit 7720. Note that, in a case where the distribution system 10 is applied to the integrated control unit 7600, the network 14, the camera 15A, the marker 16A, and the gyro sensor 16B are not provided, and the gaze direction and viewing position of the viewer is input by operation of the input unit 7800 by the occupant who is the viewer. As described above, by applying the distribution system 10 to the integrated control unit 7600 of the application example illustrated in Fig. 41, the image quality of the display image in the gaze direction generated using the omnidirectional image can be made to be high image quality (high resolution).

Furthermore, at least a part of the components of the distribution system 10 may be implemented in a module (for example, an integrated circuit module including one die) for the integrated control unit 7600 illustrated in Fig. 41. Alternatively, the distribution system 10 may be implemented by a plurality of control units of the vehicle control system 7000 illustrated in Fig. 41.

Furthermore, herein, a system means an aggregation of a plurality of constituents (device, module (component), and the like), and it does not matter whether or not all of the constituents are in the same cabinet. Thus, a plurality of devices that is accommodated in a separate cabinet and connected to each other via a network and one device that accommodates a plurality of modules in one cabinet are both systems.

Note that, the advantageous effects described in the specification are merely examples, and the advantageous effects of the present technology are not limited to them and may include other effects.

Furthermore, the embodiment of the present disclosure is not limited to the embodiments described above, and various modifications are possible without departing from the gist of the present disclosure.

For example, the present disclosure can adopt a configuration of cloud computing that shares one function in a plurality of devices via a network to process in cooperation.

Furthermore, each step described in the above flowchart can be executed by sharing in a plurality of devices, other than being executed by one device.

Moreover, in a case where a plurality of pieces of processing is included in one step, the plurality of pieces of processing included in the one step can be executed by sharing in a plurality of devices, other than being executed by one device.

Note that, the present disclosure can also adopt the following configurations.

(1) A generation device including
a normalization unit that converts a first vector that maps a 360-degree image onto a predetermined 3D model into a second vector of a 3D model of a unit sphere.
(2) The generation device according to (1), further including
a correction unit that adds a predetermined offset position vector to the second vector of the 3D model of the unit sphere converted.
(3) The generation device according to (2), in which
the correction unit adds the offset position vector that is negative to the second vector.
(4) The generation device according to (2), in which
the correction unit adds the offset position vector to the second vector multiplied by a positive constant.
(5) The generation device according to any of (1) to (4), further including
a generation unit that generates the first vector.
(6) The generation device according to any of (1) to (5), further including
a rotation processing unit that rotates a captured image to be converted into the 360-degree image such that a predetermined direction is at an image center.
(7) The generation device according to any of (1) to (6), in which
there is a plurality of high resolution directions each being a direction in which high resolution is set for the 360-degree image, and
a number of the normalization units are provided corresponding to a number of the high resolution directions.
(8) The generation device according to any of (1) to (7), further including
a setting unit that determines a high resolution improvement ratio in a high resolution direction that is a direction in which high resolution is set for the 360-degree image.
(9) The generation device according to any of (1) to (8), further including
a setting unit that generates information specifying a high resolution direction that is a direction in which high resolution is set for the 360-degree image.
(10) A generation method including
converting a first vector of a predetermined 3D model onto which a 360-degree image is mapped into a second vector of a 3D model of a unit sphere.
(11) A reproduction device including:

a receiving unit that receives a 360-degree image generated by another device; and
a normalization unit that converts a first vector that maps the 360-degree image onto a predetermined 3D model into a second vector of a 3D model of a unit sphere.

(12) The reproduction device according to (11), further including
a correction unit that adds a predetermined offset position vector to the second vector of the 3D model of the unit sphere converted.
(13) The reproduction device according to (12), in which
the correction unit adds the offset position vector that is negative to the second vector.
(14) The reproduction device according to (12), in which
the correction unit adds the offset position vector to the second vector multiplied by a positive number.
(15) The reproduction device according to any of (11) to (14), further including
a generation unit that generates the first vector.
(16) The reproduction device according to any of (11) to (15), further including
a selection unit that selects one 360-degree image from among a plurality of 360-degree images having different high resolution directions, depending on a gaze direction of a viewer, in which
the receiving unit receives the 360-degree image selected by the selection unit from the other device.
(17) The reproduction device according to any of (11) to (16), further including
a rotation calculation unit that generates rotation information on the 360-degree image on the basis of information specifying a high resolution direction of the 360-degree image.
(18) The reproduction device according to (17), further including
a drawing unit that generates a display image by rotating a 3D model image onto which the 360-degree image is mapped in accordance with the second vector of the 3D model of the unit sphere on the basis of the rotation information, and perspectively projecting the 3D model image onto a visual field range of a viewer.
(19) The reproduction device according to (18), in which
the rotation calculation unit calculates, as movement information, an amount of offset from a center of the unit sphere, and
the drawing unit generates the display image by rotating the 3D model image on the basis of the rotation information, offsetting a viewing position in accordance with the movement information, and perspectively projecting the 3D model image, from the viewing position after offset movement, onto the visual field range of the viewer.
(20) A reproduction method including:
receiving a 360-degree image generated by another device, and
converting a first vector that maps the 360-degree image onto a predetermined 3D model into a second vector of a 3D model of a unit sphere.

REFERENCE SIGNS LIST

| | |
|---|---|
| 10 | Distribution system |
| 11 | Imaging device |
| 12 | Generation device |
| 13 | Distribution server |
| 15 | Reproduction device |
| 16 | Head mounted display |
| 22-1 to 22-6 | Rotation processing unit |
| 23-1 to 23-6 | Mapping processing unit |
| 24-1 to 24-6 | Encoder |
| 25 | Setting unit |
| 26 | Table generation unit |
| 41 | Omnidirectional mapping coordinate generation unit |
| 42 | Vector normalization unit |
| 43 | Mapping correction unit |
| 122 | Decoder |
| 123 | Mapping processing unit |
| 124 | Rotation calculation unit |
| 125 | Receiving unit |
| 126 | Gaze detecting unit |

| 127 | Stream determination unit |
|-----|---------------------------|
| 128 | Drawing unit |
| 900 | Computer |
| 901 | CPU |
| 902 | ROM |
| 903 | RAM |
| 906 | Input unit |
| 907 | Output unit |
| 908 | Storage unit |
| 909 | Communication unit |
| 910 | Drive |

**Claims**

1. A generation device comprising
a normalization unit that converts a first vector that maps a 360-degree image onto a predetermined 3D model into a second vector of a 3D model of a unit sphere.

2. The generation device according to claim 1, further comprising
a correction unit that adds a predetermined offset position vector to the second vector of the 3D model of the unit sphere converted.

3. The generation device according to claim 2, wherein
the correction unit adds the offset position vector that is negative to the second vector.

4. The generation device according to claim 2, wherein
the correction unit adds the offset position vector to the second vector multiplied by a positive constant.

5. The generation device according to claim 1, further comprising
a generation unit that generates the first vector.

6. The generation device according to claim 1, further comprising
a rotation processing unit that rotates a captured image to be converted into the 360-degree image such that a predetermined direction is at an image center.

7. The generation device according to claim 1, wherein
there is a plurality of high resolution directions each being a direction in which high resolution is set for the 360-degree image, and
a number of the normalization units are provided corresponding to a number of the high resolution directions.

8. The generation device according to claim 1, further comprising
a setting unit that determines a high resolution improvement ratio in a high resolution direction that is a direction in which high resolution is set for the 360-degree image.

9. The generation device according to claim 1, further comprising
a setting unit that generates information specifying a high resolution direction that is a direction in which high resolution is set for the 360-degree image.

10. A generation method comprising
converting a first vector of a predetermined 3D model onto which a 360-degree image is mapped into a second vector of a 3D model of a unit sphere.

11. A reproduction device comprising:

a receiving unit that receives a 360-degree image generated by another device; and
a normalization unit that converts a first vector that maps the 360-degree image onto a predetermined 3D model into a second vector of a 3D model of a unit sphere.

**12.** The reproduction device according to claim 11, further comprising
a correction unit that adds a predetermined offset position vector to the second vector of the 3D model of the unit sphere converted.

**13.** The reproduction device according to claim 12, wherein
the correction unit adds the offset position vector that is negative to the second vector.

**14.** The reproduction device according to claim 12, wherein
the correction unit adds the offset position vector to the second vector multiplied by a positive number.

**15.** The reproduction device according to claim 11, further comprising
a generation unit that generates the first vector.

**16.** The reproduction device according to claim 11, further comprising
a selection unit that selects one 360-degree image from among a plurality of 360-degree images having different high resolution directions, depending on a gaze direction of a viewer, wherein
the receiving unit receives the 360-degree image selected by the selection unit from the other device.

**17.** The reproduction device according to claim 11, further comprising
a rotation calculation unit that generates rotation information on the 360-degree image on a basis of information specifying a high resolution direction of the 360-degree image.

**18.** The reproduction device according to claim 17, further comprising
a drawing unit that generates a display image by rotating a 3D model image onto which the 360-degree image is mapped in accordance with the second vector of the 3D model of the unit sphere on a basis of the rotation information, and perspectively projecting the 3D model image onto a visual field range of a viewer.

**19.** The reproduction device according to claim 18, wherein
the rotation calculation unit calculates, as movement information, an amount of offset from a center of the unit sphere, and
the drawing unit generates the display image by rotating the 3D model image on a basis of the rotation information, offsetting a viewing position in accordance with the movement information, and perspectively projecting the 3D model image, from the viewing position after offset movement, onto the visual field range of the viewer.

**20.** A reproduction method comprising:

receiving a 360-degree image generated by another device, and
converting a first vector that maps the 360-degree image onto a predetermined 3D model into a second vector of a 3D model of a unit sphere.

*FIG. 1*

# FIG. 2

GENERATION DEVICE 12

21 STITCHING PROCESSING UNIT

22-1 ROTATION PROCESSING UNIT → 23-1 MAPPING PROCESSING UNIT → 24-1 ENCODER

22-2 ROTATION PROCESSING UNIT → 23-2 MAPPING PROCESSING UNIT → 24-2 ENCODER

22-3 ROTATION PROCESSING UNIT → 23-3 MAPPING PROCESSING UNIT → 24-3 ENCODER

22-4 ROTATION PROCESSING UNIT → 23-4 MAPPING PROCESSING UNIT → 24-4 ENCODER

22-5 ROTATION PROCESSING UNIT → 23-5 MAPPING PROCESSING UNIT → 24-5 ENCODER

22-6 ROTATION PROCESSING UNIT → 23-6 MAPPING PROCESSING UNIT → 24-6 ENCODER

27 TRANSMISSION UNIT

25 SETTING UNIT

26 TABLE GENERATION UNIT

EP 3 648 064 A1

# FIG. 3

# FIG. 4

```
MAPPING PROCESSING UNIT
  41                      42                  43
  OMNIDIRECTIONAL      VECTOR            MAPPING
  MAPPING COORDINATE   NORMALIZATION     CORRECTION UNIT
  GENERATION UNIT      UNIT
                                            23
```

# FIG. 5

41

OMNIDIRECTIONAL
MAPPING COORDINATE
GENERATION UNIT

42

VECTOR
NORMALIZATION UNIT

43

MAPPING
CORRECTION UNIT

MAPPING f

MAPPING f'

MAPPING f"

FIG. 6

$(x, y, z) = f(u, v)$

EP 3 648 064 A1

*FIG. 7*

A

$$\vec{d} = f(u, v)$$

B

$$\vec{p} = \frac{\vec{d}}{|\vec{d}|}$$

C

$$\vec{q_1} = \vec{p} - \vec{s_1}$$

# FIG. 8

LOW RESOLUTION ← → HIGH RESOLUTION

# FIG. 9

$$\vec{d} = f(u, v)$$

# FIG. 10

$$\vec{p} = f'(u, v)$$

# FIG. 11

f"

$$\vec{q_1} = f"(u, v)$$

## FIG. 12

| ID | AZIMUTH ANGLE θ | ELEVATION ANGLE φ | ROTATION ANGLE ψ | ECCENTRICITY RATIO k |
|----|------------------|--------------------|--------------------|------------------------|
| 1 | 0° | 0° | 0° | 0. 5 |
| 2 | +90° | 0° | 0° | 0. 5 |
| 3 | −90° | 0° | 0° | 0. 5 |
| 4 | +180° | 0° | 0° | 0. 5 |
| 5 | 0° | +90° | 0° | 0. 5 |
| 6 | 0° | −90° | 0° | 0. 5 |

## FIG. 13

FIG. 14

# FIG. 15

GENERATION PROCESSING START

S11
MAKE COLORS AND BRIGHTNESS OF CAPTURED IMAGES IN SIX DIRECTIONS SAME, AND REMOVE OVERLAP AND CONNECT CAPTURED IMAGES TOGETHER, TO CONVERT CAPTURED IMAGES TO ONE CAPTURED IMAGE

S12
DETERMINE SIX HIGH RESOLUTION DIRECTIONS AND RESOLUTION IMPROVEMENT RATIOS

S13
ROTATE CAPTURED IMAGE SO THAT HIGH RESOLUTION DIRECTION IS AT CENTER OF IMAGE

S14
GENERATE OMNIDIRECTIONAL IMAGE IN WHICH HIGH RESOLUTION IS SET IN INDICATED DIRECTION BY MAPPING CAPTURED IMAGE ROTATED SO THAT VICINITY OF IMAGE CENTER HAS HIGH RESOLUTION ONTO PREDETERMINED 3D MODEL

S15
ENCODE OMNIDIRECTIONAL IMAGE TO GENERATE ONE ENCODED STREAM

S16
GENERATE, AS AUXILIARY INFORMATION, TABLE IN WHICH INFORMATION SPECIFYING SIX HIGH RESOLUTION DIRECTIONS AND INFORMATION INDICATING RESOLUTION IMPROVEMENT RATIOS ARE COLLECTED FOR EACH HIGH RESOLUTION DIRECTION

S17
UPLOAD SIX ENCODED STREAMS AND AUXILIARY INFORMATION TO DISTRIBUTION SERVER

END

# FIG. 16

## FIG. 17

A

142

146

145

144

141

143

B

146

145

142

144

143

141

EP 3 648 064 A1

# FIG. 18

```
( REPRODUCING PROCESSING START )
            ↓
┌─────────────────────────────────────────┐
│        RECEIVE AUXILIARY INFORMATION      │ S31
└─────────────────────────────────────────┘
            ↓
┌─────────────────────────────────────────┐
│      RECEIVE DETECTION RESULT OF GYRO SENSOR │ S32
└─────────────────────────────────────────┘
            ↓
┌─────────────────────────────────────────┐
│        DETERMINE GAZE DIRECTION OF VIEWER │ S33
└─────────────────────────────────────────┘
            ↓
┌─────────────────────────────────────────┐
│ DETERMINE VIEWING POSITION AND VISUAL FIELD RANGE OF VIEWER │ S34
└─────────────────────────────────────────┘
            ↓
┌─────────────────────────────────────────┐
│         DETERMINE ONE ENCODED STREAM FROM │ S35
│ AMONG SIX ENCODED STREAMS ON BASIS OF GAZE DIRECTION OF │
│        VIEWER AND AUXILIARY INFORMATION   │
└─────────────────────────────────────────┘
            ↓
┌─────────────────────────────────────────┐
│ SUPPLY INFORMATION SPECIFYING HIGH RESOLUTION DIRECTION OF │ S36
│ SELECTED ENCODED STREAM TO ROTATION CALCULATION UNIT │
└─────────────────────────────────────────┘
            ↓
┌─────────────────────────────────────────┐
│ GENERATE ROTATION INFORMATION ON BASIS OF INFORMATION │ S37
│     SPECIFYING HIGH RESOLUTION DIRECTION  │
└─────────────────────────────────────────┘
            ↓
┌─────────────────────────────────────────┐
│ REQUEST DISTRIBUTION SERVER TO TRANSMIT ONE ENCODED STREAM, │ S38
│   AND RECEIVE ONE ENCODED STREAM TRANSMITTED │
│           IN RESPONSE TO REQUEST          │
└─────────────────────────────────────────┘
            ↓
┌─────────────────────────────────────────┐
│ DECODE ENCODED STREAM TO GENERATE OMNIDIRECTIONAL IMAGE │ S39
│ IN WHICH HIGH RESOLUTION IS SET IN PREDETERMINED DIRECTION │
└─────────────────────────────────────────┘
            ↓
┌─────────────────────────────────────────┐
│   GENERATE 3D MODEL IMAGE BY MAPPING, AS TEXTURE, │ S40
│ OMNIDIRECTIONAL IMAGE ONTO UNIT SPHERE AS 3D MODEL │
└─────────────────────────────────────────┘
            ↓
┌─────────────────────────────────────────┐
│ ROTATE 3D MODEL IMAGE IN ACCORDANCE WITH ROTATION INFORMATION │ S41
└─────────────────────────────────────────┘
            ↓
┌─────────────────────────────────────────┐
│ GENERATE DISPLAY IMAGE BY PERSPECTIVELY PROJECTING ROTATED │ S42
│   3D MODEL IMAGE ONTO VISUAL FIELD RANGE OF VIEWER │
│ ON BASIS OF VISUAL FIELD RANGE AND GAZE POSITION OF VIEWER │
└─────────────────────────────────────────┘
            ↓
┌─────────────────────────────────────────┐
│   TRANSMIT DISPLAY IMAGE TO HEAD MOUNTED DISPLAY │ S43
│             TO DISPLAY IMAGE              │
└─────────────────────────────────────────┘
            ↓
    NO  < REPRODUCTION IS TO BE ENDED? >  S44
            ↓ YES
        ( END )
```

*FIG. 19*

A

~61

f"

~142

141

VIEWED FROM CENTER OF SPHERE

B

~61

f'

~142

141'

VIEWED FROM OFFSET POSITION

EP 3 648 064 A1

*FIG. 20*

FIG. 21

# FIG. 22

INPUT: EQUIRECTANGULAR IMAGE
COORDINATE SYSTEM: GAZE DIRECTION ($\theta$, $\varphi$)

23

MAPPING
PROCESSING UNIT

OUTPUT: ECCENTRIC SPHERICAL MAPPING IMAGE
COORDINATE SYSTEM: TEXTURE PLANE COORDINATES (u, v)

# FIG. 23

INPUT: ECCENTRIC SPHERICAL MAPPING IMAGE
COORDINATE SYSTEM: TEXTURE PLANE COORDINATES (u, v)

123 MAPPING PROCESSING UNIT

128 DRAWING UNIT

OUTPUT: PERSPECTIVE PROJECTION IMAGE
COORDINATE SYSTEM: GAZE DIRECTION ($\theta$, $\varphi$)

EP 3 648 064 A1

## FIG. 24

MAPPING PROCESSING UNIT (23)

- 41 — OMNIDIRECTIONAL MAPPING COORDINATE GENERATION UNIT
- 42 — VECTOR NORMALIZATION UNIT
- 161 — MAPPING CORRECTION UNIT

# FIG. 25

```
      41                    42                   161
OMNIDIRECTIONAL        VECTOR            MAPPING
MAPPING COORDINATE → NORMALIZATION → CORRECTION UNIT
GENERATION UNIT        UNIT
```

MAPPING f

MAPPING f'

MAPPING g

EP 3 648 064 A1

## FIG. 26

A

$$\vec{d} = f(u, v)$$

B

$$\vec{p} = \frac{\vec{d}}{|\vec{d}|}$$

C

$$\vec{q_2} = t\vec{p} + \vec{s_2}$$
$$|\vec{q_2}| = 1$$
$$t > 0$$

# FIG. 27

$$\vec{q}_2 = g(u, v)$$

# FIG. 28

$$\mu = 1 + k$$
$$0 \leqq k < 1$$

# FIG. 29

$$\mu = \frac{1}{1-k}$$

$$0 \leqq k < 1$$

FIG. 30

k=0.9

k=0.75

k=0.5

## FIG. 31

k=0.5          k=0.75          k=0.9

# FIG. 32

| NORMALIZE TO SPHERICAL SURFACE | ARRANGE PIXEL WITH MAPPING FUNCTION | VIEW PIXEL ON SPHERICAL SURFACE FROM SHIFTED POSITION | DIFFERENCE IN LIGHT BEAM DENSITY OCCURS |

## FIG. 33

| NORMALIZE TO SPHERICAL SURFACE | ARRANGE PIXEL AT INTERSECTION OF SPHERICAL SURFACE AND MAPPING FUNCTION FROM SHIFTED POSITION | VIEW PIXEL FROM CENTER OF SPHERE | DIFFERENCE IN LIGHT BEAM DENSITY OCCURS |

Low Resolution

FRONT

High Resolution

EP 3 648 064 A1

# FIG. 34

A

EQUALLY SPACED ON
SPHERICAL SURFACE

FRONT

B

NOT EQUALLY SPACED

FRONT

FIG. 35

FIG. 36

A

$$\vec{q_1} = \vec{p} - \vec{s_1}$$

B

$$\vec{q_2} = t\vec{p} + \vec{s_2}$$

C

$$\vec{q_3} = t\vec{p} + \vec{s_2} - \vec{s_1}$$

EP 3 648 064 A1

# FIG. 37

NORMALIZE TO SPHERICAL SURFACE

ARRANGE PIXEL AT INTERSECTION OF SPHERICAL SURFACE AND MAPPING FUNCTION FROM SHIFTED POSITION

VIEW PIXEL ON SPHERICAL SURFACE FROM SHIFTED POSITION

Low Resolution

FRONT

High Resolution

DIFFERENCE IN LIGHT BEAM DENSITY OCCURS

EP 3 648 064 A1

# FIG. 38

| ID | AZIMUTH ANGLE θ | ELEVATION ANGLE φ | ROTATION ANGLE ψ | ECCENTRICITY RATIO k |
|---|---|---|---|---|
| 1 | 0° | 0° | 0° | 0.5 |
| 2 | +90° | 0° | 0° | 0.5 |
| 3 | −90° | 0° | 0° | 0.5 |
| 4 | 0° | 0° | 0° | 0.0 |

# FIG. 39

A

421    422

L    R

420

B

L    ~421

R    ~422

440

## FIG. 40

## FIG. 41

EP 3 648 064 A1

# FIG. 42

## INTERNATIONAL SEARCH REPORT

| International application No. |
| --- |
| PCT/JP2018/022303 |

**A.  CLASSIFICATION OF SUBJECT MATTER**

Int.Cl.    G06T15/04(2011.01)i,  G06F13/00(2006.01)i,  G06T3/00(2006.01)i,
          H04N21/2343(2011.01)i, H04N21/431(2011.01)i,
          H04N21/4728(2011.01)i

According to International Patent Classification (IPC) or to both national classification and IPC

**B.  FIELDS SEARCHED**

Minimum documentation searched (classification system followed by classification symbols)

Int.Cl.     G06T15/04, G06F13/00, G06T3/00, H04N21/2343, H04N21/431,
          H04N21/4728

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2003-141562 A (SONY CORP.) 16 May 2003,<br>abstract, paragraphs [0049]-[0196], fig. 1-40 & US<br>2004/0247173 A1, abstract, fig. 1-40, paragraphs<br>[0099]-[0246] & EP 1441307 A1 & WO 2003/038752 A1<br>& CN 1491403 A & KR 10-2004-0050888 A | 1-6, 10-15, 20<br>7-9, 16-19 |

☒   Further documents are listed in the continuation of Box C.          ☐   See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 September 2018 (07.09.2018) | 18 September 2018 (18.09.2018) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/022303 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2016/140083 A1 (SONY CORP.) 09 September 2016, abstract, paragraphs [0063]-[0214], fig. 9-19 & US 2018/0007387 A1, abstract, fig. 9-19, paragraphs [0094]-[0245] | 7-9, 16-19 |
| A | JP 10-243310 A (HE HOLDINGS, INC. DBA HUGHES ELECTRONICS) 11 September 1998, abstract, fig. 1 & US 6317127 B1, abstract, fig. 1 & EP 0838787 A2 | 1-20 |
| A | JP 2005-283704 A (HITACHI, LTD.) 13 October 2005, abstract, fig. 1, 2, 4, 5 (Family: none) | 1-20 |

Form PCT/ISA/210 (continuation of second sheet) (January 2015)

**EP 3 648 064 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016015705 A